(19) Europäisches Patentamt
European Patent Office
Office européen des brevets

(11) **EP 4 280 769 A1**

(12) **EUROPEAN PATENT APPLICATION**
published in accordance with Art. 153(4) EPC

(43) Date of publication:
**22.11.2023 Bulletin 2023/47**

(21) Application number: **22739575.3**

(22) Date of filing: **07.01.2022**

(51) International Patent Classification (IPC):
**H04W 72/12** (2023.01)     **H04W 72/04** (2023.01)
**H04B 7/06** (2006.01)     **H04B 7/024** (2017.01)
**H04B 7/0408** (2017.01)     **H04L 5/00** (2006.01)
**H04B 17/373** (2015.01)

(52) Cooperative Patent Classification (CPC):
**H04B 7/024; H04B 7/0408; H04B 7/06;
H04B 17/373; H04L 5/00; H04W 72/04;
H04W 72/12**

(86) International application number:
**PCT/KR2022/000276**

(87) International publication number:
**WO 2022/154377 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021 KR 20210005599
02.04.2021 KR 20210043602
05.08.2021 KR 20210103075
13.08.2021 KR 20210107545**

(71) Applicant: **LG Electronics Inc.
Yeongdeungpo-gu
Seoul 07336 (KR)**

(72) Inventors:
• **KIM, Seonwook**
  Seoul 06772 (KR)
• **YANG, Suckchel**
  Seoul 06772 (KR)
• **KIM, Hyungtae**
  Seoul 06772 (KR)
• **KANG, Jiwon**
  Seoul 06772 (KR)
• **MYUNG, Sechang**
  Seoul 06772 (KR)

(74) Representative: **Frenkel, Matthias Alexander
Wuesthoff & Wuesthoff
Patentanwälte PartG mbB
Schweigerstraße 2
81541 München (DE)**

(54) **METHOD AND DEVICE FOR TRANSMITTING/RECEIVING WIRELESS SIGNAL IN WIRELESS COMMUNICATION SYSTEM**

(57)     A method and a device for uplink transmission/reception in a wireless communication system. An uplink transmission method, according to one embodiment of the present disclosure, may comprise the steps of: receiving, from a base station, setting information for setting one or more parameters for first uplink transmission; receiving, form the base station, downlink control information (DCI) for scheduling one or more second uplink transmissions; and performing the first uplink transmission and/or the one or more second uplink transmissions to the base station. The one or more second uplink transmissions is scheduled in the time resource that differs from that of the first uplink transmission, and whether the first uplink transmission and/or the one or more second uplink transmissions are performed can be determined according to the time required for beam switching and/or the time required for cancelling the uplink transmission on the basis of the difference between the first beam information for the first uplink transmission and the second beam information for the one or more second uplink transmissions.

FIG.11

| Transmit configuration information for configuring one or more parameters for a first uplink transmission | ~S1101 |

↓

| Transmit DCI for scheduling one or more second uplink transmissions | ~S1102 |

↓

| Receive a first uplink transmission and/or one or more second uplink transmissions | ~S1103 |

**Description**

[Technical Field]

The present disclosure relates to a wireless communication system, and in more detail, relates to a method and an apparatus of transmitting and receiving a radio signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving one or more uplink transmissions or one or more downlink transmissions scheduled through single downlink control information.

In addition, an additional technical object of the present disclosure is to provide a method and apparatus for determining beams for one or more uplink transmissions or one or more downlink transmissions.

The technical objects to be achieved by the present disclosure are not limited to the above-described technical objects, and other technical objects which are not described herein will be clearly understood by those skilled in the pertinent art from the following description.

[Technical Solution]

A method of transmitting an uplink in a wireless communication system according to an aspect of the present disclosure may include: receiving, from a base station, configuration information for configuring one or more parameters for first uplink transmission; receiving, from the base station, downlink control information (DCI) for scheduling one or more second uplink transmissions; and transmitting, to the base station, the first uplink transmission and/or the one or more second uplink transmissions. The one or more second uplink transmissions may be scheduled in a time resource different from the first uplink transmission, based on first beam information for the first uplink transmission and the second beam information for the one or more second uplink transmissions being different, whether to transmit the first uplink transmission and/or the one or more second uplink transmissions may be determined based on time required for beam switching and/or time required to cancel an uplink transmission.

A method of receiving an uplink in a wireless communication system according to an additional aspect of the present disclosure may include: transmitting, to a user equipment (UE), configuration information for configuring one or more parameters for first uplink transmission; transmitting, to the UE, downlink control information (DCI) for scheduling one or more second uplink transmissions; and receiving, from the UE, the first uplink transmission and/or the one or more second uplink transmissions. The one or more second uplink transmissions may be scheduled in a time resource different from the first uplink transmission, based on first beam information for the first uplink transmission and the second beam information for the one or more second uplink transmissions being different, whether to transmit the first uplink transmission and/or the one or more second uplink transmissions may be assumed to be determined based on time required for beam switching and/or time required to cancel an uplink transmission.

[Advantageous Effects]

According to an embodiment of the present disclosure, by supporting scheduling for one or more downlink transmissions and/or one or more uplink transmissions through one downlink control information, transmission efficiency of scheduling downlink control information for downlink transmission and/or uplink transmission can be increased.

According to an embodiment of the present disclosure, by supporting a method of determining a beam for one or more downlink transmissions and/or one or more uplink transmissions, ambiguity on downlink transmission and/or uplink transmission operations can be prevented.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method for transmitting and receiving a configured grant PUSCH and a dynamic grant PUSCH according to an embodiment of the present disclosure.
FIG. 8 is a diagram illustrating a signaling procedure between a base station and a UE for a method of transmitting and receiving an uplink signal according to an embodiment of the present disclosure.
FIG. 9 is a diagram illustrating a signaling procedure between a base station and a UE for a method of transmitting and receiving an uplink signal according to an embodiment of the present disclosure.
FIG. 10 is a diagram illustrating an operation of a UE for a method of transmitting and receiving an uplink according to an embodiment of the present disclosure.
FIG. 11 is a diagram illustrating an operation of a base station for a method of transmitting and receiving an uplink according to an embodiment of the present disclosure.
FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal

- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

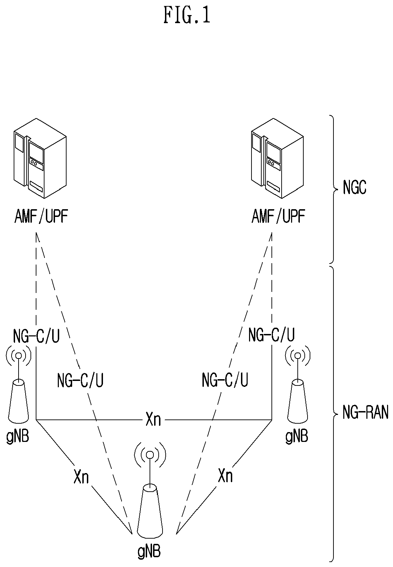

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

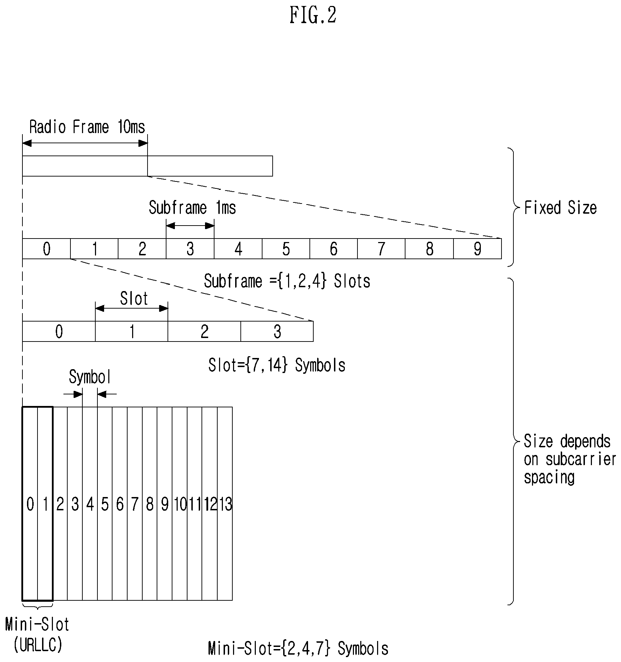

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480·103 Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in\{0,_{...},$ $N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

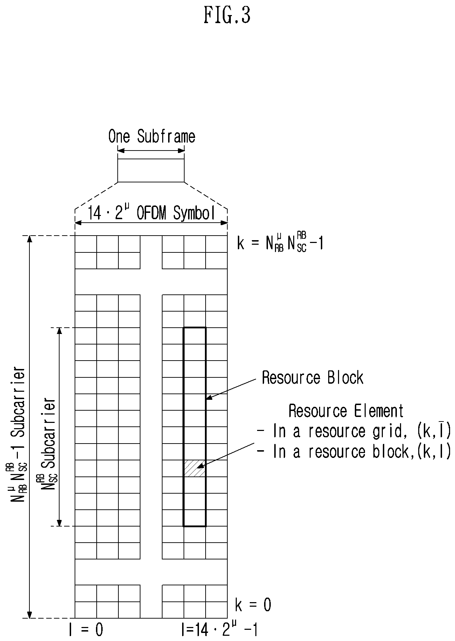

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

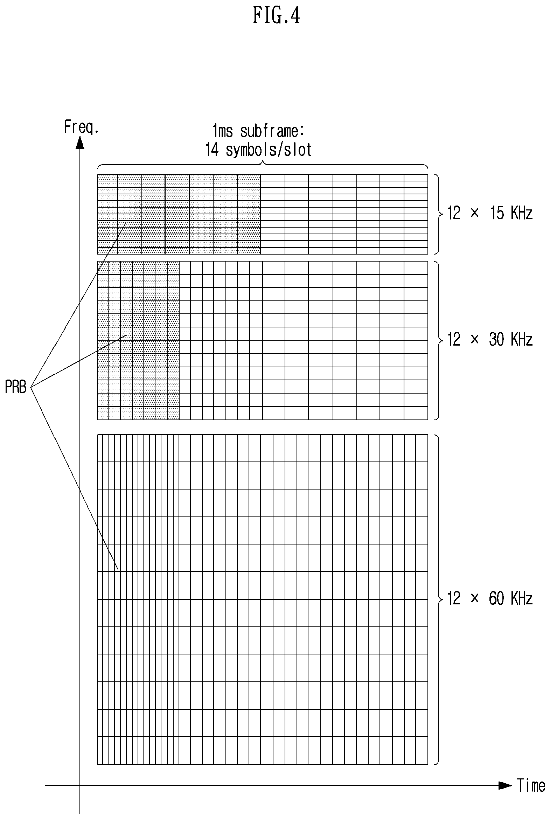

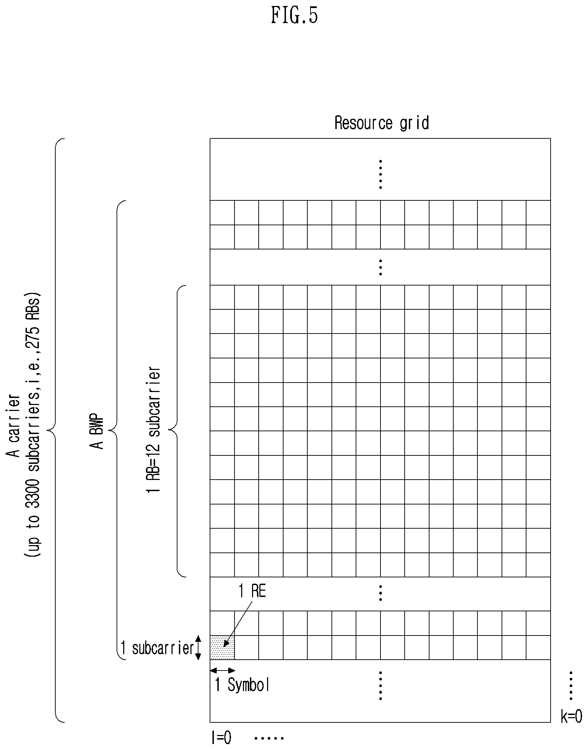

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC) . If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

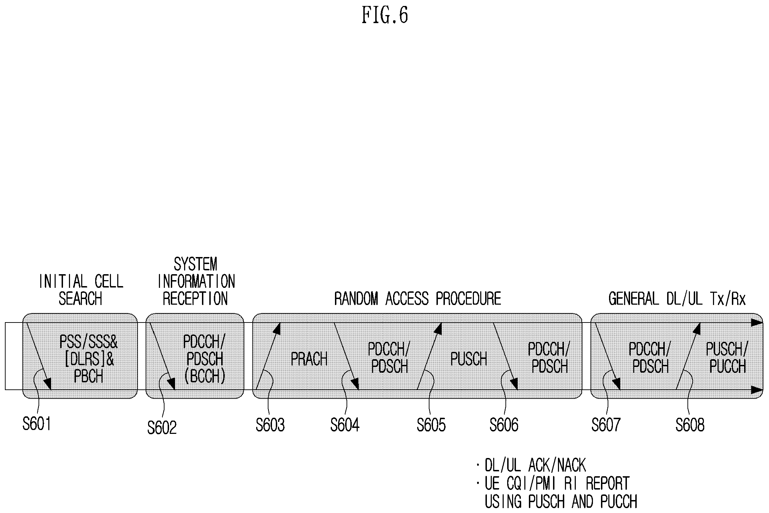

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Method for scheduling (multiple) uplink/downlink data

Symbols/abbreviations/terms used in the present disclosure are as follows.

- TDRA: Time Domain Resource Allocation
- SLIV: Starting and Length Indicator Value (As an indication value for a start symbol index and a number of symbols in a slot of a PDSCH and/or a PUSCH, a component of an entry constituting a TDRA field in a PDCCH scheduling the corresponding PDSCH and/or the PUSCH may be configured.)
- SFI: Slot Format Indicator (An indicator indicating a symbol level DL/UL direction within a specific slot(s), and is transmitted through a group common PDCCH).
- COT: Channel occupancy time
- SPS: Semi-persistent scheduling
- TCI: Transmission Configuration Indication (One TCI state includes a QCL relationship between one or more DL RSs such as DM-RS ports of a PDSCH, DM-RS ports of a PDCCH, or CSI-RS port(s) of a CSI-RS resource, etc. For 'Transmission Configuration Indication' among fields in DCI for scheduling a PDSCH, a TCI state index corresponding to each code point constituting the field is activated by a MAC control element (CE), and a TCI state configuration for each TCI state index is configured through RRC signaling. In the Rel-16 NR system, a TCI state is configured between DL RSs, however in a future release, a configuration between a DL RS and a UL RS or between a UL RS and a UL RS may be allowed. Examples of a UL RS include an SRS, a PUSCH DM-RS, a PUCCH DM-RS, etc.)
- SRI: SRS resource indicator (It indicates one of SRS resource index values configured in 'SRS resource indicator' among fields in DCI scheduling a PUSCH. When transmitting a PUSCH, a UE may transmit a PUSCH using the same spatial domain transmission filter used for transmission and reception of a reference signal associated with the corresponding SRS resource. Here, a reference RS is configured by RRC signaling through an SRS spatial relationship information parameter (SRS-SpatialRelationInfo) for each SRS resource, and an SS/PBCH block, a CSI-RS, or an SRS, etc. may be configured as a reference RS.)
- TRP: Transmission and Reception Point

In order to increase transmission efficiency of scheduling DCI for a PDSCH and/or a PUSCH, transmission of a plurality of PDSCHs and/or a plurality of PUSCHs may be supported through one DCI. In the present disclosure, a method of configuring a transmission/reception beam (or TCI state or SRI) for a plurality of PDSCHs and/or a plurality of PUSCHs indicated by corresponding DCI is proposed.

In a multi-TRP environment in the Rel-16 NR system, by receiving a plurality of PDSCHs from different TRPs (or from the same TRP through different beams), a function to improve throughput or improve reliability is introduced. Specifically, the following transmission modes have been introduced, and descriptions of specifications corresponding to each scheme will be described later.

- eMBB scheme: When there are two TCI states corresponding to a code point indicated in the 'Transmission Configuration Indication' field in DCI scheduling a PDSCH and two CDM groups are indicated and when the number of PDSCHs configured in a row index on the indicated TDRA is 1, this scheme can be applied. Here, each TRP may transmit a PDSCH in the same time/frequency resource region (In the present disclosure, transmission of different TRPs may be substituted with transmission of different beams within the same TRP). However, each TRP may utilize antenna ports corresponding to different CDM groups to map and transmit PDSCHs to different layers. CDM groups are defined for each DM-RS configuration type as shown in Tables 6 and 7 below. For example, it is assumed that a UE has two TCI states, TCI#0 and TCI#1, configured in a code point corresponding to the 'Transmission Configuration Indication' field indicated through DCI format 1_1, and is assigned CDM groups 0 and 1. Here, TRP#A may transmit a PDSCH through DM-RS port(s) corresponding to CDM group 0 with a beam corresponding to TCI#0. TRP#B may transmit a PDSCH through DM-RS port(s) corresponding to CDM group 1 with a beam corresponding to TCI#1. By acquiring a QCL relationship for the DM-RS port(s) corresponding to CDM group 0 through TCI#0, and a QCL relationship for the DM-RS port(s) corresponding to CDM group 1 through TCI#1, a UE may receive PDSCHs.

- FDM scheme A/B: This is a method in which two TRPs divide frequency domain resources and transmit them. Scheme A is a method of dividing and transmitting encoded bits generated through one encoding block for the same transport block (TB) . Scheme B is a method of transmitting individual encoded bits generated through individual encoding blocks for the same TB. For example, it is assumed that a UE configured with FDM scheme A has two TCI states, TCI#0 and TCI#1, configured in a code point corresponding to the 'Transmission Configuration Indication' field indicated through DCI format 1_1 and is assigned one CDM group 0. If 20 PRBs are allocated, when there are encoded bits from one encoding block, TRP#A can transmit some of them through 10 PRBs, and TRP#B can transmit the remaining encoded bits through other 10 PRBs.

- TDM scheme A: TDM transmission is performed by different TRPs, and the same TB is repeatedly transmitted by dividing one slot. For example, it is assumed that a UE configured with TDM scheme A has two TCI states, TCI#0 and TCI#1, configured in a code point corresponding to the 'Transmission Configuration Indication' field indicated through DCI format 1_1 and is assigned one CDM group 0. If time domain resources are allocated during a symbol period from symbol 0 to 5, TRP#A can transmit PDSCH#1 for 5 symbols from symbol 0 to symbol 4, and TRP#B can transmit PDSCH#2 for 5 symbols from symbol 4 + StartingSymbolOffsetK to symbol 8 + StartingSymbolOffsetK (If it is configured by RRC signaling, a value between 0 and 7 may be set.). Here, PDSCH#1 and PDSCH#2 carry the same TB, and each TRP can generate an individual encoding block from it.

- TDM scheme B: Similar to TDM scheme A, different TRPs are transmitted through TDM, however the TRP transmission is transmitted in individual slots. For example, it is assumed that a UE configured with TDM scheme B has two TCI states, TCI#0 and TCI#1, configured in a code point corresponding to the 'Transmission Configuration Indication' field indicated through DCI format 1_1 and is assigned one CDM group 0. In addition, it can be applied when the number of PDSCHs configured in a row index on the indicated TDRA is two or more. A starting symbol index and the number of symbols applied to each PDSCH may be the same, and each PDSCH may be mapped to consecutive slots. For example, if the number of PDSCHs is two, TCI#0 may correspond to the first PDSCH, and TCI#1 may correspond to the next PDSCH. As another example, if the number of PDSCHs exceeds 2, when cyclicMapping is configured, TCI states may correspond to each PDSCH such as TCI#0/1/0/1/..., when sequential mapping is configured, TCI states may correspond to each PDSCH such as TCI*0/0/1/1/ ....

A standard description corresponding to each of the above-described methods is as follows.

When a UE is configured by higher layer parameter repetitionScheme set to one of FDM scheme A('fdmSchemeA'), FDM scheme B('fdmSchemeB'), TDM scheme A('tdmSchemeA'), if the UE is indicated with two TCI states in a codepoint of the DCI field 'Transmission Configuration Indication' and DM-RS port(s) within one CDM group in the DCI field 'Antenna Port(s)':

- When two TCI states are indicated in DCI and the UE is set to 'fdmSchemeA', the UE shall receive a single PDSCH transmission occasion of the TB with each TCI state associated to a non-overlapping frequency domain resource allocation (i.e., FDM scheme A).

- When two TCI states are indicated in DCI and the UE is set to 'fdmSchemeB', the UE shall receive two PDSCH transmission occasions of the same TB with each TCI state associated to a PDSCH transmission occasion which has non-overlapping frequency domain resource allocation with respect to the other PDSCH transmission occasion (i.e., FDM scheme B).
- When two TCI states are indicated in DCI and the UE is set to 'tdmSchemeA', the UE shall receive two PDSCH transmission occasions of the same TB with each TCI state associated to a PDSCH transmission occasion which has non-overlapping time domain resource allocation with respect to the other PDSCH transmission occasion and both PDSCH transmission occasions shall be received within a given slot (i.e., FDM scheme A) .

When a UE is configured by the higher layer parameter repetitionNumber in PDSCH-TimeDomainResourceAllocation, the UE may expect to be indicated with one or two TCI states in a codepoint of the DCI field 'Transmission Configuration Indication' together with the DCI field 'Time domain resource assignment' indicating an entry which contains repetitionNumber in PDSCH-TimeDomainResourceAllocation and DM-RS port(s) within one CDM group in the DCI field 'Antenna Port(s)'.

- When two TCI states are indicated in a DCI with 'Transmission Configuration Indication' field, the UE may expect to receive multiple slot level PDSCH transmission occasions of the same TB with two TCI states used across multiple PDSCH transmission occasions in the repetitionNumber consecutive slots (i.e., TDM scheme B).
- When one TCI state is indicated in a DCI with 'Transmission Configuration Indication' field, the UE may expect to receive multiple slot level PDSCH transmission occasions of the same TB with one TCI state used across multiple PDSCH transmission occasions in the repetitionNumber consecutive slots.

When a UE is not indicated with DCI that DCI field 'Time domain resource assignment' indicating an entry which contains repetitionNumber in PDSCH-TimeDomainResourceAllocation, and the UE is indicated with two TCI states in a codepoint of the DCI field 'Transmission Configuration Indication' and DM-RS port(s) within two CDM groups in the DCI field 'Antenna Port(s)', the UE may expect to receive a single PDSCH where the association between the DM-RS ports and the TCI states are (i.e., eMBB scheme).

When a UE is configured by the higher layer parameter repetitionScheme set to 'tdmSchemeA' and indicated DM-RS port(s) within one CDM group in the DCI field 'Antenna Port(s)', the number of PDSCH transmission occasions is derived by the number of TCI states indicated by the DCI field 'Transmission Configuration Indication' of the scheduling DCI. (i.e., TDM scheme A)

- If two TCI states are indicated by the DCI field 'Transmission Configuration Indication', the UE is expected to receive two PDSCH transmission occasions. Here, the first TCI state is applied to the first PDSCH transmission occasion and resource allocation in time domain for the first PDSCH transmission occasion follows TS 38.214 Clause 5.1.2.1. The second TCI state is applied to the second PDSCH transmission occasion, and the second PDSCH transmission occasion shall have the same number of symbols as the first PDSCH transmission occasion. If the UE is configured by the higher layers with a value K in StartingSymbolOffsetK, it shall determine that the first symbol of the second PDSCH transmission occasion starts after K symbols from the last symbol of the first PDSCH transmission occasion. If the value K is not configured via the higher layer parameter StartingSymbolOffsetK, K = 0 shall be assumed by the UE. The UE is not expected to receive more than two PDSCH transmission layers for each PDSCH transmission occasion. For two PDSCH transmission occasions, the redundancy version to be applied is derived according to the predetermined table, where n = 0, 1 applied respectively to the first and second TCI state. The UE expects the PDSCH mapping type indicated by DCI field 'Time domain resource assignment' to be mapping type B, and the indicated PDSCH mapping type is applied to both PDSCH transmission occasions.
- Otherwise, the UE is expected to receive a single PDSCH transmission occasion, and the resource allocation in the time domain follows TS 38.214 Clause 5.1.2.1.

When a UE configured by the higher layer parameter PDSCH-config that indicates at least one entry contains repetitionNumber in PDSCH-TimeDomainResourceAllocation (i.e., TDM scheme B),

- If two TCI states are indicated by the DCI field 'Transmission Configuration Indication' together with the DCI field 'Time domain resource assignment' indicating an entry which contains repetitionNumber in PDSCH-TimeDomainResourceAllocation and DM-RS port(s) within one CDM group in the DCI field 'Antenna Port(s)', the same SLIV is applied for all PDSCH transmission occasions across the repetitionNumber consecutive slots, the first TCI state is applied to the first PDSCH transmission occasion and resource allocation in time domain for the first PDSCH transmission occasion follows TS 38.214 Clause 5.1.2.1.

**EP 4 280 769 A1**

When the value indicated by repetitionNumber in PDSCH-TimeDomainResourceAllocation equals to two, the second TCI state is applied to the second PDSCH transmission occasion. When the value indicated by repetitionNumber in PDSCH-TimeDomainResourceAllocation is larger than two, the UE may be further configured to enable cyclicMapping or sequenticalMapping in tciMapping.

- When cyclicMapping is enabled, the first and second TCI states are applied to the first and second PDSCH transmission occasions, respectively, and the same TCI mapping pattern continues to the remaining PDSCH transmission occasions.
- When sequenticalMapping is enabled, first TCI state is applied to the first and second PDSCH transmissions, and the second TCI state is applied to the third and fourth PDSCH transmissions, and the same TCI mapping pattern continues to the remaining PDSCH transmission occasions.

Table 6 illustrates parameters for PDSCH DM-RS configuration type 1.

[Table 6]

| p | CDM group $\lambda$ | $\Delta$ | $w_f(k')$ | | $w_t(l')$ | |
|------|------|------|------|------|------|------|
| | | | k'=0 | k'=1 | l'=0 | l'=1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Table 7 illustrates parameters for PDSCH DM-RS configuration type 2.

[Table 7]

| p | CDM group $\lambda$ | $\Delta$ | $w_f(k')$ | | $w_t(l')$ | |
|------|------|------|------|------|------|------|
| | | | k'=0 | k'=1 | l'=0 | l'=1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

The eMBB/FDM/TDM schemes described above may be equally extended and applied to a PUSCH. Here, a TCI state may be substituted with an SRI. Alternatively, a TCI state may be defined for a PUSCH DM-RS, and a TCI state may be applied as it is to the schemes for a PUSCH. Similarly, in the present disclosure, a TCI state may be substituted with an SRI in the case of a PUSCH. Alternatively, a TCI state may be defined for a PUSCH DM-RS, and a TCI state may be applied as it is in the present disclosure to a PUSCH.

In addition, in the present disclosure, applying a specific TCI state to PDSCH reception with respect to a UE mean obtaining QCL parameter(s) from reference RS(s) configured in a corresponding TCI state when a PDSCH DM-RS is received. In addition, with respect to a UE, applying a specific TCI state (or SRI) to PUSCH transmission may mean transmitting a PUSCH uses the same filter as a spatial domain filter applied when transmitting or receiving (reception when a reference RS is a DL RS, transmission when a reference RS is a UL RS) a reference RS associated with a corresponding TCI state (or SRI).

In addition, in the present disclosure, applying a specific TCI state to PDSCH transmission with respect to a base station may mean transmitting so that a UE can assume a QCL relationship with reference RS(s) configured in a corresponding TCI state during PDSCH DM-RS transmission. In addition, with respect to a base station, applying a specific TCI state (or SRI) to PUSCH reception may mean receiving a PUSCH using the same filter as a spatial domain filter applied when transmitting or receiving (transmission when a reference RS is a DL RS, reception when a reference RS is a UL RS) a reference RS associated with a corresponding TCI state (or SRI).

When transmitting a PUSCH, a UE may transmit the PUSCH using the same spatial domain transmission filter used for transmission or reception of a reference signal associated with a corresponding SRS resource. Here, a reference RS may be configured by RRC signaling through the SRS-SpatialRelationInfo parameter for each SRS resource, and an SS/PBCH block, a CSI-RS, or an SRS, etc. may be configured as the reference RS.

In the NR system, a mmWave band (e.g., from 7.125 or 24 GHz to 52.6 GHz) is defined as frequency range 2 (FR2). In the corresponding band, sub-carrier spacing (SCS) of an SS/PBCH block may be either 120 or 240 kHz, and that of other signals/channels (e.g., PDCCH, PDSCH, PUSCH, etc.) may be either 60 or 120 kHz.

In a high frequency NR system (e.g., from 52.6 GHz to 71 GHz, named FR3 (or FR2-2) for convenience of description), larger SCSs may be introduced. If the scalability of an OFDM symbol duration and a CP length defined in the current NR system is maintained, an OFDM symbol duration and a CP length for each SCS can be defined with the lengths shown in Table 8 below.

[Table 8]

| SCS [kHz] | 120 | 240 | 480 | 960 |
|---|---|---|---|---|
| Symbol duration | 8.33 $\mu$s | 4.17 $\mu$s | 2.08 $\mu$s | 1.04 $\mu$s |
| CP length | 586 ns | 293 ns | 146 ns | 73 ns |

In the FR3 (or FR2-2) frequency band, PDCCH monitoring may be performed in one slot per a plurality of slots in consideration of the monitoring capability of a UE. As a result, an operation of scheduling multiple PDSCHs and/or multiple PUSCHs through one DCI may be introduced in consideration of a reduced PDCCH monitoring occasion area. However, a PDSCH and/or PUSCH indicated through such DCI (This means scheduling multiple PDSCHs and/or multiple PUSCHs through one DCI, and the corresponding DCI is referred to as m-PXSCH DCI for convenience in this disclosure.) may be indicated to be transmitted not only in FR3 (or FR2-2) but also in other frequency ranges. That is, DCI for scheduling multiple PDSCHs and/or multiple PUSCHs proposed in this disclosure is not limited to the NR system operating in FR3 (or FR2-2) and can be applied to other frequency domains as well.

In addition, in the present disclosure, a method of scheduling a plurality of PUSCHs (or PDSCHs) through m-PXSCH DCI may be implemented in two ways, however may be applied to other methods. In the following options, a UE can distinguish whether a single PXSCH is scheduled or multiple PXSCHs are scheduled according to which row index value among TDRA entries is indicated (For convenience, a PUSCH or a PDSCH is referred to as PXSCH) .

Option (Opt) 1: A plurality of SLIV values (and mapping types, etc.) corresponding to row index n among TDRA entries may be configured. For example, in row index n, it is assumed that 5 symbols from symbol 1 to symbol 5 are configured for SLIV#0, 8 symbols from symbol 6 to symbol 13 are configured for SLIV#1, and 13 symbols from symbol 0 to symbol 12 are configured for SLIV#2. In this case, when row index n is indicated, the scheduled PDSCHs (or PUSCHs) may be sequentially transmitted or received from slot k (i.e., a total of 3 PDSCHs or PUSCHs by concatenating SLIV#0 and SLIV#1 on slot k, followed by SLIV#2 on slot k+1).

Option (Opt) 2: A SLIV value (and mapping type, etc.) corresponding to row index n among TDRA entries may be configured to one. In addition, a repetition number value may be configured. For example, it is assumed that 8 symbols from symbol 1 to symbol 8 and repetition number = 3 are configured for a SLIV in row index n. In this case, when row index n is indicated, the scheduled PDSCHs (or PUSCHs) can be transmitted and received for 3 consecutive slots from slot k (i.e., a total of 3 PDSCHs or PUSCHs by applying SLIV values on each slot k/k+1/k+2).

Embodiment 1: If a plurality of TCI states are indicated by the 'Transmission Configuration Indication' (TCI) field in m-PXSCH DCI, when only a single PXSCH is scheduled, according to the configured parameter(s), the above-described eMBB scheme, FDM scheme A/B, or TDM scheme A/B may be applied to transmission and reception of the single PXSCH. That is, a transmitter of a PXSCH (i.e., a base station for a PDSCH, or a UE for a PUSCH) can perform this operation, and a receiver of a PXSCH (i.e., a UE for a PDSCH, a base station for a PUSCH) can assume this operation.

On the other hand, if a plurality of TCI states are indicated by a TCI field in m-PXSCH DCI, when a plurality of PXSCHs are scheduled, a specific one of TCI states indicated by a TCI field (e.g., the first/last TCI state) may be applied to transmission and reception of a plurality of PXSCHs or a default TCI state (i.e., a TCI state configured in a CORESET of the most recent lowest index or a TCI state corresponding to a specific code point in a TCI field) may be applied to transmission and reception of a plurality of PXSCHs. That is, a transmitter of a PXSCH (i.e., a base station for a PDSCH, or a UE for a PUSCH) can perform this operation, and a receiver of a PXSCH (i.e., a UE for a PDSCH, or a base station for a PUSCH) can assume this operation. Here, when a default TCI state is applied, a corresponding TCI field in DCI may be omitted.

If different individual TBs are transmitted for each PXSCH when a plurality of PXSCHs are transmitted and received, it may be difficult to obtain a spatial diversity effect due to transmission and reception through a plurality of TRPs. Therefore, when only a single PXSCH is scheduled through m-PXSCH DCI, it may be more advantageous to repeatedly transmit the same TB through the eMBB scheme, FDM scheme, or TDM scheme, etc. On the other hand, when a plurality of PXSCHs are scheduled through m-PXSCH DCI, it may be more advantageous to transmit and receive all PXSCHs through the same TCI state (a corresponding beam reception performance is the best). For example, as shown in Table 9 below, a QCL relationship for each TCI state index is configured by RRC signaling, and TCI state indexes corresponding to each code point are configured through MAC CE. In the case of a UE configured with an FDM scheme (A or B), when only a single PDSCH is scheduled through m-PXSCH DCI and '000' is indicated through a TCI field, the FDM scheme corresponding to TCI state indexes 1 and 3 may be applied to transmission and reception of the single PDSCH.

On the other hand, when '111' is indicated through a TCI field when a plurality of PDSCHs are scheduled through m-PXSCH DCI, TCI state 0, which is the first of the corresponding TCI state indexes 0 and 3, (or TCI state index 1 corresponding to the first TCI state corresponding to the first code point '000' or TCI state index 2 corresponding to the first code point '001' having one TCI state value or a TCI state corresponding to the lowest index CORESET configured for the most recent slot) may be applied to transmission and reception of all PDSCHs.

[Table 9]

| Code point of TCI field (3 bits) | Corresponding TCI state(s) |
|---|---|
| 000 | TCI state index 1, TCI state index 3 |
| 001 | TCI state index 2 |
| ... | ... |
| 111 | TCI state index 0, TCI state index 3 |

As another example, one SLIV value (and mapping type, etc.) corresponding to row index n among TDRA entries may be configured, and a repetition number value may be configured (i.e., the TDM scheme B). In addition, a plurality of SLIV values (and mapping type, etc.) corresponding to different row index k may be configured (i.e., Opt 1). If a row index n value is indicated by DCI, a plurality of TCI states may be applied according to the TDM scheme B. On the other hand, when row index k value is indicated by DCI, when '111' is indicated through a TCI field, TCI state 0, which is the first of the corresponding TCI state indexes 0 and 3, (or TCI state index 1 corresponding to the first TCI state corresponding to the first code point '000' or TCI state index 2 corresponding to the first code point '001' having one TCI state value or a TCI state corresponding to the lowest index CORESET configured for the most recent slot) may be applied to transmission and reception of all PDSCHs.

Embodiment 2: A plurality of entry tables corresponding to the 'Transmission Configuration Indication' (TCI) field in m-PXSCH DCI are preconfigured, and an entry table may be differently applied to transmission and reception of the m-PXSCH according to the number of actually scheduled PXSCHs. Specifically, for the number N of schedulable PXSCHs (= 1, 2, 3, ...), an entry table corresponding to each N may be preconfigured. In addition, when the number of actually scheduled PXSCHs is N_s, a TCI field can be interpreted by information for each code point configured in an entry table corresponding to N_s. Here, each code point configured in an entry table corresponding to N_s may be composed of N_s TCI states, and each of the N_s TCI states may correspond 1:1 to N_s PXSCHs scheduled by m-PXSCH DCI. That is, a transmitter of a PXSCH (i.e., a base station for a PDSCH, a UE for a PUSCH) can perform this operation, and a receiver of a PXSCH (i.e., a UE for a PDSCH, a base station for a PUSCH) can assume this operation.

Alternatively, entry table #1 corresponding to a single PXSCH and entry table #2 corresponding to a plurality of PXSCHs may be configured separately. In this case, when only a single PXSCH is scheduled in m-PXSCH DCI, a TCI field can be interpreted by information for each code point configured in entry table #1 (i.e., apply a corresponding TCI state for PXSCH transmission and reception), and when a plurality of multiple PXSCHs are scheduled in m-PXSCH DCI, a TCI field can be interpreted by information for each code point configured in entry table #2 (i.e., apply a corresponding TCI state for PXSCH transmission and reception). That is, a transmitter of a PXSCH (i.e., a base station for a PDSCH, a UE for a PUSCH) can perform this operation, and a receiver of a PXSCH (i.e., a UE for a PDSCH, a base station for a PUSCH) can assume this operation.

In Example 1 above, when a plurality of PXSCHs are scheduled, there may be a restriction that a TCI state is determined by a specific rule. In order to solve this problem, even if multiple PXSCHs are scheduled, a method for indicating a TCI state more flexibly is proposed.

For example, entry table #1 corresponding to a single PDSCH is configured as shown in Table 9 above (e.g., through MAC CE), and entry table #2 corresponding to multiple PXSCHs is configured as shown in Table 10 below, separately. Here, in the case of a table corresponding to multiple PXSCHs, such as entry table #2, the number of TCI states corresponding to each code point may be limited to one. In the case of a UE configured with the FDM scheme (A or B), when only a single PDSCH is scheduled through m-PXSCH DCI and '000' is indicated through a TCI field, (refer to entry table #1) an FDM scheme corresponding to TCI state indexes 1 and 3 may be applied to transmission and reception of the single PDSCH. On the other hand, when multiple PDSCHs are scheduled through m-PXSCH DCI and '111' is indicated through a TCI field, (refer to entry table #2) a corresponding TCI state index 6 may be applied to all PDSCH transmission and reception.

[Table 10]

| Code point of TCI field (3 bits) | Corresponding TCI state(s) |
|---|---|
| 000 | TCI state index 4 |
| 001 | TCI state index 7 |
| ... | ... |
| 111 | TCI state index 6 |

As another example, different TCI tables may be configured for each DCI format. Entry table #2 for an m-PXSCH DCI format (e.g., DCI format 0_1 or 1_1) and entry table #1 for a DCI format (e.g., DCI format 0_2 or 1_2) that can schedule only a single PXSCH can be configured separately. If only a single PDSCH is scheduled in m-PXSCH DCI, entry table #2 may be used. Here, as in Embodiment 1, when there are a plurality of TCI states corresponding to the indicated TCI codepoint, a single TCI state may be applied (Alternatively, Embodiment 4 described later may be applied, or entry table # 2 may be limited to be associated with only a single TCI state for each code point).

Alternatively, a plurality of entry tables corresponding to the 'Transmission Configuration Indication' (TCI) field in m-PXSCH DCI are preconfigured and depending on which scheme among SDM/FDM scheme A/FDM scheme B/TDM scheme A/TDM scheme B is applied, an entry table may be applied differently (or partly the same). For example, for a UE configured with an FDM scheme, entry table #1 for FDM and entry table #2 for SDM may be separately configured. Here, entry table #2 may be applied to PDSCH (s) to which SDM is applied due to an m-PXSCH DCI indication, and entry table #1 may be applied to PDSCH (s) to which FDM scheme is applied.

Embodiment 3: When a plurality of TCI states are indicated in the 'Transmission Configuration Indication' (TCI) field in the m-PXSCH DCI and a plurality of PXSCHs are scheduled, the eMBB scheme or FDM scheme A/B or TDM scheme A/B described above may apply to only a specific (e.g., first) PXSCH according to a configuration parameter, and for other PXSCH(s), a specific one of the indicated TCI states (e.g., the first TCI state) may be applied or a default TCI state (e.g., a TCI state corresponding to the latest lowest index CORESET TCI or a specific code point in a TCI field) may be applied.

In Embodiments 1 and 2, when multiple PXSCHs are scheduled, a single TCI state is applied to all PXSCHs, however in this embodiment, even if a plurality of PXSCHs are scheduled, reception from multi-TRP (for PDSCH) or transmission toward multi-TRP (for PUSCH) may be allowed for a specific PXSCH.

For example, as shown in Table 9 above, it is assumed that TCI state indexes corresponding to each code point are configured. In the case of a UE configured with an FDM scheme (A or B), when a plurality of PDSCHs are scheduled through m-PXSCH DCI, and when '111' is indicated through a TCI field, a configured FDM scheme may be applied to the m-th PDSCH (The value of m may be predefined or configured to a specific value (e.g., m = 1), and may be indicated/configured by a base station (e.g., through a separate DCI field). In addition, the corresponding m value may be plural, and in this case, it may be indicated in the form of a bitmap within a DCI field). In addition, TCI state 0, which is the first of TCI state indexes 0 and 3, (or TCI state index 1 corresponding to the first TCI state corresponding to the first code point '000' or TCI state index 2 corresponding to the first code point '001' having one TCI state value or a TCI state corresponding to the lowest index CORESET configured for the most recent slot) may be applied to other PDSCH(s). That is, a transmitter of a PXSCH (i.e., a base station for a PDSCH, or a UE for a PUSCH) can perform this operation, and a receiver of a PXSCH (i.e., a UE for a PDSCH, or a base station for a PUSCH) can assume this operation.

Embodiment 4: When a plurality of PXSCHs in m-PXSCH DCI are scheduled, a UE may not expect that a plurality of TCI states are indicated in the 'Transmission Configuration Indication' (TCI) field. When a plurality of PXSCHs in m-PXSCH DCI are scheduled, a base station may not indicate a plurality of TCI states in the TCI field.

Alternatively, when a plurality of PXSCHs in m-PXSCH DCI are scheduled, even if a plurality of TCI states are indicated in a TCI field, a UE can ignore the remaining TCI states except for one specific TCI state (e.g., the first TCI state, or a TCI state having an index preconfigured by a base station) .

When multiple PXSCHs are scheduled as in Embodiment 1 and Embodiment 2 above, a rule for applying a single TCI state to all PXSCHs may be determined through specific handling. However, a UE can expect that such a combination (i.e., a combination of DCI field indications in which a plurality of TCI states are indicated in a TCI field while a plurality of PXSCHs are scheduled) is not indicated without determining such a rule. A base station may configure/define a rule so as not to indicate such a combination (i.e., a combination of DCI field indications in which a plurality of TCI states are indicated in a TCI field while a plurality of PXSCHs are scheduled).

Alternatively, when a corresponding combination is indicated, a UE may ignore corresponding DCI. In other words, if multiple PXSCHs are scheduled through m-PXSCH DCI, a UE can expect that the number of TCI states indicated by a TCI field is one. When multiple PXSCHs are scheduled through m-PXSCH DCI, the number of TCI states indicated by a base station in a TCI field may be limited to one.

Embodiment 5: Even when a plurality of TCI states are indicated in the 'Transmission Configuration Indication' (TCI) field in m-PXSCH DCI and a plurality of PXSCHs are scheduled, according to the configured parameter(s), the above-described eMBB scheme, FDM scheme A/B, or TDM scheme A/B may also be applied to a corresponding plurality of PXSCHs.

In the above embodiment 1/2/3/4, when multiple PXSCHs are scheduled, a single TCI state is applied to all PXSCHs, however in this embodiment, even if multiple PXSCHs are scheduled, transmission from multi-TRP (for PDSCH) or transmission toward multi-TRP (for PUSCH) may be allowed for the scheduled PXSCH.

- Embodiment 5-1: A plurality of TCI states (e.g., TCI state #i and TCI state #j) are indicated in the 'Transmission Configuration Indication' (TCI) field in m-PXSCH DCI, and N PXSCH is scheduled, Alt 1) TCI states may be applied in the form of cyclic mapping such as TCI state #i to the first PXSCH, TCI state #j to the second PXSCH, and TCI state #i to the third PXSCH, or Alt 2) TCI states may be applied in the form of sequential mapping such as TCI state #i on the first PXSCH, TCI state #i on the second PXSCH, TCI state #j on the third PXSCH, TCI state #j on the fourth PXSCH, TCI state #i on the fifth PXSCH, and TCI state #i on the sixth PXSCH, or Alt3) TCI state #i may be applied to the first N/2 (or ceiling or floor function values of N/2) PXSCHs and TCI state #j may be applied to the remaining PXSCHs.

Here, for a UE configured with a TDM scheme, when an index with a configured repetition number is indicated among TDRA entries, the same TB is repeatedly received by applying an existing TDM scheme, and when an index in which a plurality of SLIV values are configured among TDRA entries is indicated, the corresponding Embodiment 5-1 can be applied to individual TBs (for each PXSCH).

- Embodiment 5-2: When two CDM groups are indicated and two TCI states are indicated as in the eMBB scheme, even if a plurality of PXSCHs are scheduled through m-PXSCH DCI, the existing eMBB scheme may be applied to each PXSCH.
- Embodiment 5-3: When the FDM scheme or TDM scheme is configured, and one CDM group is indicated and two TCI states are indicated, a plurality of PXSCHs are scheduled through m-PXSCH DCI, an existing FDM scheme or TDM scheme may be applied for each PXSCH. For example, if three PXSCHs are scheduled through m-PXSCH DCI for a UE configured with an FDM scheme, PDSCHs can be transmitted by dividing frequency domain resources allocated to each PDSCH and applying different TCI states in each TRP. As another example, it is assumed that for a UE configured with TDM scheme A, there are two TCI states, TCI#0 and TCI#1, configured in a code point corresponding to the 'Transmission Configuration Indication' field indicated through DCI format 1_1 and one CDM group 0 is assigned. If a plurality of SLIV values are associated with the indicated TDRA row index, TDM scheme A may be applied for each SLIV. However, if a time domain resource corresponding to a specific SLIV is allocated for 5 symbol durations from symbol 7, TRP#A can transmit PDSCH#1 for 5 symbols from symbol 7 to symbol 1, and TRP#B can transmit PDSCH#2 for 5 symbols from symbol 11 + StartingSymbolOffsetK (If configured by RRC signaling, a value between 0 and 7 can be configured.). However, a problem may occur in which a part of corresponding PDSCH#2 is not located in the same slot as PDSCH#1. That is, in mapping PDSCH#2 after the last symbol of PDSCH#1 + StartingSymbolOffsetK, all or part of PDSCH#2 may not be mapped to the same slot as PDSCH#1.

In this case, Alt 1) PDSCH#2 is dropped and only PDSCH#1 is transmitted, where TCI#0 (or TCI#1) may be applied to PDSCH#1. Alternatively, Alt 2) PDSCH#2 as well as PDSCH#1 may be dropped. Alternatively, Alt 3) PDSCH#2 may be mapped prior to PDSCH#1. Specifically, PDSCH#2 may be mapped so that the first symbol - StartingSymbolOffsetK-1 of PDSCH#1 corresponds to the last symbol of PDSCH#2. Alternatively, Alt 4) Alt 1, Alt 2, or Alt 3 may be applied when a (valid) SLIV following a SLIV corresponding to PDSCH#1 and a time domain resource of PDSCH#2 overlap. On the other hand, if there is no overlap, PDSCH#2 may be allowed to map after the last symbol of PDSCH#1 + StartingSymbolOffsetK.

Embodiment #5-4: When multiple PXSCHs are scheduled through m-PXSCH DCI, whether the same TB transmission or individual TB transmission is additionally through DCI (e.g., an additional field is introduced/defined or by reinterpreting an existing field). If it is the same TB transmission, PXSCHs are transmitted through a configured/indicated scheme among the existing eMBB, FDM, or TDM schemes according to a UE configuration, and if individual TB transmission, a single TCI state as in the proposed Embodiment 1/2/3 can be applied. For example, when 4 PDSCHs are scheduled through m-PXSCH DCI, among the 4 PDSCHs, a base station may indicated to a UE by distinguish a PDSCH to which an MTRP transmission method is applied using a plurality of TCI states (as in the proposed Embodiment 1/2/3) and a PDSCH to which a STRP transmission method is applied using one TCI state (as in the proposed embodiment 1/2/3).

Embodiment 6: Considering the importance of m-PXSCH DCI, a rule may be determined to increase a priority of a search space set associated with the corresponding DCI format. For example, when multiple CORESETs overlap on the same symbol, a search space set associated with the DCI format may be configured to be a higher priority to reduce a drop frequency of a CORESET linked to the search space set. As another example, in applying a search space set dropping rule by PDCCH overbooking to a P(S)Cell, a search space set associated with the corresponding DCI format may be configured to be a higher priority to reduce a drop frequency.

Alternatively, a priority (such as a search space set) may be higher or lower according to the number of PDSCHs scheduled by m-PXSCH DCI. For example, if the number of PDSCHs scheduled by m-PXSCH DCI is M or more (M is a natural number), when a CORESET or a search space set corresponding to m-PXSCH DCI is dropped, many PDSCHs scheduled by the DCI cannot be received. Therefore, when the number of PDSCHs scheduled by m-PXSCH DCI is M or more, a probability of being dropped can be reduced by raising a priority (such as a search space set). This method is effective when the number of PDSCHs scheduled by m-PXSCH DCI is indicated in advance through RRC signaling instead of M being indicated through DCI.

Embodiment 7: When an offset between m-PXSCH DCI and a corresponding PDSCH is smaller than a time interval for QCL (timeDurationForQCL), and even one of the TCI states configured for a corresponding PDSCH is configured to QCL type D, a default TCI state to be applied to the corresponding PDSCH is proposed.

Different default TCI state rules may be defined for the case of scheduling only one PDSCH and the case of scheduling a plurality of PDSCHs in m-PXSCH DCI. Here, when only one PDSCH is scheduled (And when multiple TCI states are associated/indicated in a TCI field), TCI states corresponding to the lowest code point to which two TCI states are associated/indicated are applied, so that an existing eMBB, TDM, or FDM scheme can be applied. That is, when at least one TCI codepoint indicates two TCI states, a UE may assume that DM-RS ports of a PDSCH or PDSCH transmission occasions of a serving cell are QCLed with RS(s) with respect to QCL parameter (s) associated with TCI states corresponding to the lowest codepoint among TCI codepoints including two different TCI states.

On the other hand, when a plurality of PDSCHs are scheduled, a TCI state configured to the most recent lowest index CORESET may be applied. That is, a UE assumes that DM-RS ports of a PDSCH of a serving cell are QCLed with RS(s) with respect to QCL parameter(s) used for a PDCCH QCL indication of a CORESET. Here, the CORESET is a CORESET associated with a monitored search space having the lowest CORESET index (controlResourceSetId) among one or more CORESETs in an active BWP of a serving cell in the most recent slot monitored by a UE.

When only a single TCI state is configured for all code points in a TCI field, a TCI state configured in a CORESET having the latest lowest index can be applied when all PDSCHs are received, regardless of the number of scheduled PDSCHs.

The proposed method is limited and applied only to PDSCHs in which a distance between DCI and a PDSCH (DCI-to-PDSCH) is less than a time interval for QCL (timeDurationForQCL) among a plurality of PDSCHs scheduled by m-PXSCH DCI. Alternatively, when a distance between DCI-to-PDSCHs is less than timeDurationForQCL even for one PDSCH among a plurality of PDSCHs, it may be commonly applied to all PDSCHs.

Embodiment 8: When a beam indicated/configured through m-PUSCH DCI (or DCI scheduling a single PUSCH) and a beam configured for a configured grant PUSCH (CG-PUSCH) in which transmission is configured prior to a dynamic grant PUSCH (DG-PUSCH) scheduled through the corresponding DCI are different, a CG-PUSCH and/or DG-PUSCH transmission method is proposed.

Prior to describing the present disclosure, a CG-PUSCH configuration will be described.

PUSCH configured grants are classified into configured grant (CG) Type 1 and CG Type 2.

In CG Type 1, resource allocation is completely configured or released using RRC signaling. When CG Type 1 is configured, a UE is allocated a resource set capable of periodically transmitting a PUSCH. A PDCCH is required only when retransmission is required. CG Type 1 PUSCH transmission is semi-statically configured to operate when receiving the higher layer parameter configuredGrantConfig including rrc-ConfiguredUplinkGrant without detecting a UL grant in DCI. A UE may perform PUSCH transmission according to configured CG Type 1 until additional RRC signaling is reconfigured to a UE.

In CG Type 2, resource allocation is partially configured using RRC signaling, and activation/release is indicated using PDCCH transmission. Since a PDCCH also provides time and frequency resource allocation, resource allocation may be different each time it is activated. CG Type 2 PUSCH transmission is semi-persistently scheduled by a UL grant in valid activation DCI after receiving the higher layer parameter configuredGrantConfig that does not include rrc-ConfiguredUplinkGrant.

One or more CG configurations of CG Type 1 and/or CG Type 2 may be simultaneously activated on an activated BWP of a serving cell.

In PUSCH transmission corresponding to CG Type 1 or CG Type 2, parameters for PUSCH transmission may be provided by configuredGrantConfig.

Table 11 shows an example of configuredGrantConfig IE. configuredGrantConfig IE is used to configure uplink transmission without dynamic grant by DCI. An actual uplink grant may be configured by RRC (CG Type 1) or provided through a PDCCH (by CS-RNTI) (CG Type 2). Multiple CG configurations can be configured within one BWP of a serving cell.

【Table 11】

```
-- ASN1START
-- TAG-CONFIGUREDGRANTCONFIG-START

ConfiguredGrantConfig ::=              SEQUENCE {
    frequencyHopping                       ENUMERATED {intraSlot, interSlot}
OPTIONAL,    -- Need S
    cg-DMRS-Configuration              DMRS-UplinkConfig,
    mcs-Table                          ENUMERATED {qam256, qam64LowSE}
OPTIONAL,    -- Need S
    mcs-TableTransformPrecoder         ENUMERATED {qam256, qam64LowSE}
OPTIONAL,    -- Need S
    uci-OnPUSCH                        SetupRelease { CG-UCI-OnPUSCH }
OPTIONAL,    -- Need M
    resourceAllocation                 ENUMERATED { resourceAllocationType0,
resourceAllocationType1, dynamicSwitch },
    rbg-Size                           ENUMERATED {config2}
OPTIONAL,    -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}
OPTIONAL,    -- Need S
    nrofHARQ-Processes                 INTEGER(1..16),
    repK                               ENUMERATED {n1, n2, n4, n8},
    repK-RV                            ENUMERATED {s1-0231, s2-0303, s3-0000}
OPTIONAL,    -- Need R
    periodicity                        ENUMERATED {
                                           sym2, sym7, sym1x14, sym2x14, sym4x14,
sym5x14, sym8x14, sym10x14, sym16x14, sym20x14,
                                           sym32x14, sym40x14, sym64x14, sym80x14,
sym128x14, sym160x14, sym256x14, sym320x14, sym512x14,
```

```
                                                      sym640x14, sym1024x14, sym1280x14,
sym2560x14, sym5120x14,
                                                      sym6, sym1x12, sym2x12, sym4x12, sym5x12,
sym8x12, sym10x12, sym16x12, sym20x12, sym32x12,
                                                      sym40x12, sym64x12, sym80x12, sym128x12,
sym160x12, sym256x12, sym320x12, sym512x12, sym640x12,
                                                      sym1280x12, sym2560x12
        },
        configuredGrantTimer                  INTEGER (1..64)
OPTIONAL,    -- Need R
        rrc-ConfiguredUplinkGrant             SEQUENCE {
            timeDomainOffset                      INTEGER (0..5119),
            timeDomainAllocation                  INTEGER (0..15),
            frequencyDomainAllocation             BIT STRING (SIZE(18)),
            antennaPort                           INTEGER (0..31),
            dmrs-SeqInitialization                INTEGER (0..1)
OPTIONAL,    -- Need R
            precodingAndNumberOfLayers            INTEGER (0..63),
            srs-ResourceIndicator                 INTEGER (0..15)
OPTIONAL,    -- Need R
            mcsAndTBS                             INTEGER (0..31),
            frequencyHoppingOffset                INTEGER (1.. maxNrofPhysicalResourceBlocks-1)
OPTIONAL,    -- Need R
            pathlossReferenceIndex                INTEGER (0..maxNrofPUSCH-PathlossReferenceRSs-
1),
            ...,
            [[
            pusch-RepTypeIndicator-r16            ENUMERATED {pusch-RepTypeA,pusch-RepTypeB}
OPTIONAL,    -- Need M
            frequencyHoppingPUSCH-RepTypeB-r16  ENUMERATED {interRepetition, interSlot}
OPTIONAL,    -- Cond RepTypeB
            timeReferenceSFN-r16                  ENUMERATED {sfn512}
OPTIONAL    -- Need S
            ]]
        }
OPTIONAL,    -- Need R
    ...,
```

In Table 11, the periodicity represents a period for uplink CG transmission, which means a time interval between consecutive continuous resource allocations. The periodicityExt is used to calculate a period of an uplink CG, and if this parameter does not exist, the periodicity is ignored. An uplink CG period has different values supported according to the configured subcarrier spacing.

The nrofHARQ-Processes represents the number of HARQ processes configured for an uplink CG. In the case of dynamic resource allocation, a HARQ process identifier is specified within DCI associated with each resource allocation. However, in an uplink CG, an identifier of a HARQ process is determined based on the nrofHARQ-Processes value and the periodicity value.

The repK represents the number of repetitions. That is, it indicates a repetition level for each PUSCH transmission. The repK can have one of {1,2,4,8}. In case of CG Type 1, if the push-RepTypeIndicator in the rrc-ConfiguredUplinkGrant indicates 'pusch-RepTypeB', PUSCH repetition type B is applied, otherwise PUSCH repetition type A is applied. In the case of CG Type 2, a PUSCH repetition type is determined by a UL grant of DCI. According to the configured PUSCH repetition type A or B, a UE repeatedly transmits an uplink TB by the configured number of repetitions.

The repK-RV represents a redundancy version sequence. The repK-RV is configured when A repetition is used (i.e., when repK is configured to one of {2,4,8}).

The resourceAllocation indicates a configuration of bitmap-based resource allocation type 0 or resource indication value (RIV)-based resource allocation type 1.

The mcs-Table indicates an MCS table used by a UE for a PUSCH in which transform precoding is not used, and the mcs-TableTransformPrecoder indicates an MCS table used by a UE for a PUSCH in which transform precoding is used. The transformPrecoder indicates whether to enable for a PUSCH of transform precoding.

The rrc-ConfiguredUplinkGrant is a configuration for CG Type 1 transmission. If this field does not exist, a UE uses a UL grant configured by DCI by a CS-RNTI (i.e., CG Type 2). The timeDomainOffset represents an offset related to a reference system frame number (SFN) indicated by the timeReferenceSFN. The timeReferenceSFN indicates an SFN used to determine an offset of a resource in a time domain. A UE uses an SFN closest to a number indicated before receiving a configured grant configuration, and if this field does not exist, a reference SFN is 0.

An antenna port value, a bit value for DM-RS sequence initialization, precoding information and the number of layers, and an SRS resource indicator are provided by the antennaPort, the dmrs-SeqInitialization, the precodingAndNumberOfLayers, and the srs-ResourceIndicator, respectively.

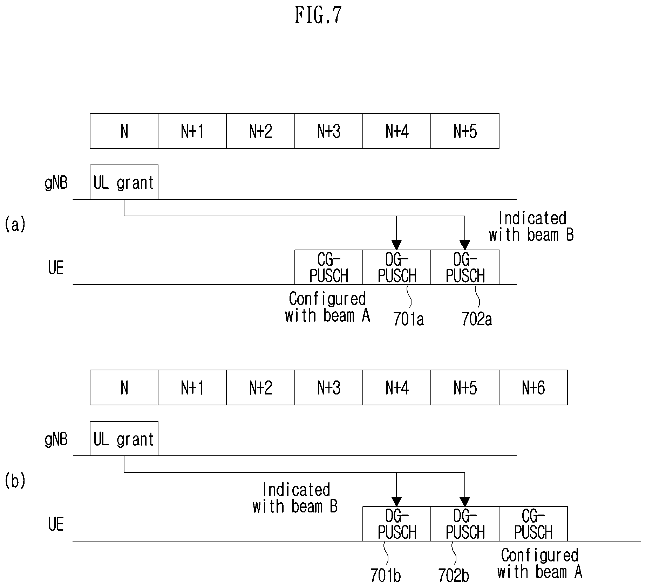

FIG. 7 illustrates a method for transmitting and receiving a configured grant PUSCH and a dynamic grant PUSCH according to an embodiment of the present disclosure.

Referring to FIG. 7, m-PUSCH DCI (or single PUSCH DCI) is transmitted in slot #N, and a DG-PUSCH to be transmitted by a UE in slot #N+4/N+5 (i.e., in the case of m-PUSCH) (or slot #N+4 (i.e., in case of single PUSCH)) may be scheduled. Here, beam information to be applied to a DG-PUSCH may be beam B through the corresponding DCI (or a method configured by higher layer signaling). Although FIG. 7 illustrates a case in which two DG-PUSCHs are scheduled by one DCI, the present disclosure is not limited thereto, and one or more DG-PUSCHs may be scheduled by one DCI.

Here, as shown in FIG. 7(a), CG-PUSCH transmission may be configured in advance in slot #N+3, and a beam to be applied to the corresponding CG-PUSCH may be beam A.

Alternatively, as shown in FIG. 7(b), CG-PUSCH transmission may be configured in advance in slot #N+6, and a beam to be applied to the corresponding CG-PUSCH may be beam A.

That is, one or more DG-PUSCHs may be scheduled in a time resource different from that of a configured CG-PUSCH.

However, it may be difficult to implement a UE that continuously (e.g., in consecutive slots or symbols) (or in time intervals smaller than a certain number of slots or symbols) transmits a CG-PUSCH and a DG-PUSCH using different beams. Therefore, a CG-PUSCH and/or DG-PUSCH transmission method is proposed to solve this problem.

In the present disclosure, beam (i.e., beam information for transmission beam configuration) is a QCL source (e.g., QCL type-D reference RS) and/or a TCI state index and/or an SRS resource indicator (SRI), etc. In addition, the difference in beams (i.e., beam information for transmission beam configuration) may mean that a QCL source (e.g., QCL type-D reference RS) and/or a TCI state index and/or an SRI are configured/indicated differently.

Specifically, one of the following options or a plurality of rules may be applied. In the following, for a UE, time required for beam switching may pre-define or a UE may report the corresponding time to a base station (e.g., through a report of a UE's capability). In the present disclosure, for convenience of description, the corresponding time is referred to as beam switching time (BST) (e.g., it may be denoted as the number of slots or symbols, or as a unit of time such as millisecond (msec), microsecond ($\mu$s), etc.).

In addition, time required for a UE to cancel (or drop) a preconfigured CG-PUSCH (or UL transmission in which transmission related parameter(s) are configured through RRC signaling such as a periodic SRS, a semi-persistent SRS, a semi-persistent CSI PUSCH, a periodic PUCCH, a semi-persistent PUCCH, etc.) by receiving certain specific DCI may be defined. In this case, only when time longer than the corresponding time (i.e., UL cancellation time) is given (e.g., when a DG-PUSCH transmission slot scheduled by DCI is a slot after the corresponding time (i.e., UL cancellation time) from a CG-PUSCH transmission slot, etc.), a UE can cancel/drop CG-PUSCH transmission (or UL transmission in which transmission-related parameter(s) are configured through RRC signaling) during the corresponding time. The time required for such UL transmission cancellation is referred to as UL cancellation time (UCT) (e.g., it may be denoted as the number of slots or symbols, or as a unit of time such as millisecond (msec), microsecond ($\mu$s), etc.) for convenience. In addition, in this embodiment, a CG-PUSCH is substituted with UL transmission in which related parameter(s) are configured through higher layer signaling (e.g., RRC signaling) such as a periodic SRS, a semi-persistent SRS, a PUSCH carrying semi-persistent CSI, a periodic PUCCH, a semi-persistent PUCCH, etc., and the same method proposed in this embodiment can be applied (i.e., first uplink transmission). That is, first uplink transmission means uplink transmission without a dynamic grant by downlink control information (DCI), and may include data transmitted through a physical channel as well as a physical (reference) signal.

In addition, in this embodiment, a DG-PUSCH is substituted with a UL signal/channel such as an aperiodic SRS triggered through a UL grant, and the same method as proposed can be applied (i.e., second uplink transmission). That is, second uplink transmission means uplink transmission based on a dynamic grant based on downlink control information (DCI), and may include data transmitted through a physical channel as well as a physical (reference) signal.

The proposed methods described later can be applied when, with respect to a time sequence between first uplink transmission (e.g., CG-PUSCH) and one or more second uplink transmissions (e.g., DG-PUSCH) to which configured beams are different, first uplink transmission precedes and one or more second uplink transmissions follow, as shown in FIG. 7(a), or when one or more second uplink transmissions precede and first uplink transmission follows, as shown in FIG. 7(b).

Hereinafter, for convenience of description, the proposed method will be described with reference to FIG. 7, and for convenience of description, it is assumed that first uplink transmission is a CG-PUSCH, and one or more second uplink transmissions are one or more DG-PUSCHs.

- Option 1 (Opt1): After receiving a UL grant in slot #N, if BST required for a UE to apply beam B instead of beam A for CG-PUSCH transmission is sufficient (i.e., when an interval (e.g. number of slots or symbols, or units of time such as milliseconds (msec), microseconds ($\mu$s), etc.) from reception time of DCI scheduling a DG-PUSCH to transmission time configured for a CG-PUSCH is greater than (or greater than or equal to) BST), a UE may change a beam for CG-PUSCH transmission to beam B and transmit a CG-PUSCH based on beam B information (i.e., by applying beam B). Here, a UE may transmit a DG-PUSCH based on beam B information (i.e., by applying beam B).

- Option 2 (Opt2): After receiving a UL grant in slot #N, if BST required for a UE to apply beam B instead of beam A for CG-PUSCH transmission is not sufficient (i.e., when an interval (e.g. number of slots or symbols, or units of time such as milliseconds (msec), microseconds (μs), etc.) from reception time of DCI scheduling a DG-PUSCH to transmission time configured for a CG-PUSCH is smaller than BST), a UE may not transmit a CG-PUSCH (i.e., may drop). Here, a UE may transmit a DG-PUSCH based on beam B information (i.e., by applying beam B).

Alternatively, without considering BST, as in the example of FIG. 7, if DG-PUSCH transmission through a beam different from a CG-PUSCH is indicated/configured after a resource configured for a CG-PUSCH, a UE may not transmit a CG-PUSCH (i.e., may drop). Here, a UE may transmit a DG-PUSCH based on beam B information (i.e., by applying beam B).

- Option 3 (Opt3): After receiving a UL grant in slot #N, if BST required for a UE to apply beam B instead of beam A for CG-PUSCH transmission is not sufficient (i.e., when an interval (e.g. number of slots or symbols, or units of time such as milliseconds (msec), microseconds (μs), etc.) from reception time of DCI scheduling a DG-PUSCH to transmission time configured for a CG-PUSCH is smaller than BST), however after receiving a UL grant in slot #N, if UCT required for a UE to cancel CG-PUSCH transmission is sufficient (i.e., when an interval (e.g. number of slots or symbols, or units of time such as milliseconds (msec), microseconds (μs), etc.) from reception time of DCI scheduling a DG-PUSCH to transmission time configured for a CG-PUSCH is greater than (or greater than or equal to) UCT), a UE may not transmit a CG-PUSCH (i.e., may drop). Here, a UE may transmit a DG-PUSCH based on beam B information (i.e., by applying beam B).

- Option 4 (Opt4): After receiving a UL grant in slot #N, if BST required for a UE to apply beam B instead of beam A for CG-PUSCH transmission is not sufficient (i.e., when an interval (e.g. number of slots or symbols, or units of time such as milliseconds (msec), microseconds (μs), etc.) from reception time of DCI scheduling a DG-PUSCH to transmission time configured for a CG-PUSCH is smaller than BST), in addition, after receiving a UL grant in slot #N, if UCT required for a UE to cancel CG-PUSCH transmission is not sufficient (i.e., when an interval (e.g. number of slots or symbols, or units of time such as milliseconds (msec), microseconds (μs), etc.) from reception time of DCI scheduling a DG-PUSCH to transmission time configured for a CG-PUSCH is smaller than UCT), a UE transmits a CG-PUSCH based on beam A information (i.e., by applying beam A), but may not transmit a DG-PUSCH (i.e., may drop).

Here, when a plurality of DG-PUSCHs are simultaneously scheduled through one DCI, among a plurality of DG-PUSCHs, only a DG-PUSCH closest to a CG-PUSCH in a time domain (or the closest n (n is a natural number) DG-PUSCHs) may not be transmitted (i.e., may drop).

Referring to FIG. 7(a), when a plurality of DG-PUSCHs (701a, 702a) are simultaneously scheduled through one DCI, a UE may not transmit or drop only the first DG-PUSCH (701a) (among a plurality of scheduled DG-PUSCHs) after a CG-PUSCH.

Alternatively, referring to FIG. 7(b), when a plurality of DG-PUSCHs (701b, 702b) are simultaneously scheduled through one DCI, only the first DG-PUSCH (702b) (among a plurality of scheduled DG-PUSCHs) immediately before a CG-PUSCH may not be transmitted or may be dropped.

- Option 5 (Opt5): A plurality of beams may be configured for a CG-PUSCH. If one of a plurality of beams configured for a CG-PUSCH is configured to beam B (i.e., when beam B is included), the option 1(Opt1) may be applied. That is, a UE may transmit a CG-PUSCH based on beam B information (i.e., by applying beam B).

On the other hand, if beam B is not configured among a plurality of beams configured for a CG-PUSCH (i.e., when beam B is not included), a UE may not transmit a CG-PUSCH (i.e., may drop) .

- Option 6 (Opt6): When DG-PUSCH transmission through a beam different from the CG-PUSCH is instructed / configured after the resource configured in the CG-PUSCH as above (without considering BST), i) after receiving a UL grant in slot #N, if UCT required for a UE to cancel CG-PUSCH transmission is sufficient (i.e., when an interval (e.g. number of slots or symbols, or units of time such as milliseconds (msec), microseconds (μs), etc.) from reception time of DCI scheduling a DG-PUSCH to transmission time configured for a CG-PUSCH is greater than (or greater than or equal to) UCT), a UE may not transmit a CG-PUSCH (i.e. may drop), or ii) if UCT is not sufficient (i.e., when an interval (e.g. number of slots or symbols) from reception time of DCI scheduling a DG-PUSCH to transmission time configured for a CG-PUSCH is small than UCT), a UE may transmit a CG-PUSCH based on beam A information (i.e., by applying beam A) but may not transmit a DG-PUSCH (i.e., may drop)

In the case of i) above, a UE may transmit a DG-PUSCH based on beam B (i.e., by applying beam B).

In the case of ii) above, when a plurality of DG-PUSCHs are simultaneously scheduled through one DCI, among a plurality of DG-PUSCHs, only a DG-PUSCH closest to a CG-PUSCH in a time domain (or the closest n (n is a natural number) DG-PUSCHs) may not be transmitted (i.e., may be dropped).

Referring to FIG. 7(a), when a plurality of DG-PUSCHs (701a, 702a) are simultaneously scheduled through one DCI, a UE may not transmit or drop only the first DG-PUSCH (701a) (among a plurality of scheduled DG-PUSCHs) after a CG-PUSCH.

Alternatively, referring to FIG. 7(b), when a plurality of DG-PUSCHs (701b, 702b) are simultaneously scheduled through one DCI, only the first DG-PUSCH (702b) immediately before the CG-PUSCH (among a plurality of scheduled DG-PUSCHs) may not be transmitted or may be dropped.

- Option 7 (Opt7): When a gap (i.e., interval) (e.g., the number of slots or symbols, or a unit of time such as milliseconds (msec), microseconds ($\mu$s), etc.) exists between transmission time of a CG-PUSCH (e.g., transmission slot or symbol) and transmission time of a DG-PUSCH (e.g., transmission slot or symbol) and the corresponding gap is greater than or equal to BST, a UE transmits a CG-PUSCH based on beam A information (i.e., applying beam A as configured) and transmits a DG-PUSCH based on beam B information (i.e., applying beam B as instructed/configured) .

However, when there is no gap (e.g. number of slots or symbols, or units of time such as milliseconds (msec), microseconds ($\mu$s), etc.) between transmission time of a CG-PUSCH (e.g., transmission slot or symbol) and transmission time of a DG-PUSCH (e.g., transmission slot or symbol), or even if there is a gap, when the gap is smaller than BST, some or all of the above options may be applied.

Considering that a BST value and a UCT value may be defined/configured differently according to sub-carrier spacing (SCS), and a relationship between large and small may change, other option(s) may be applied depending on SCS. In addition, a BST value may be configured differently according to characteristics of a band (e.g., whether it is an unlicensed band or a licensed band). For example, in the case of an unlicensed band, a beam must be changed and LBT (listen before talk) must succeed in the changed beam direction, therefore considering time required for LBT, BST defined in an unlicensed band may be longer than BST defined in a licensed band.

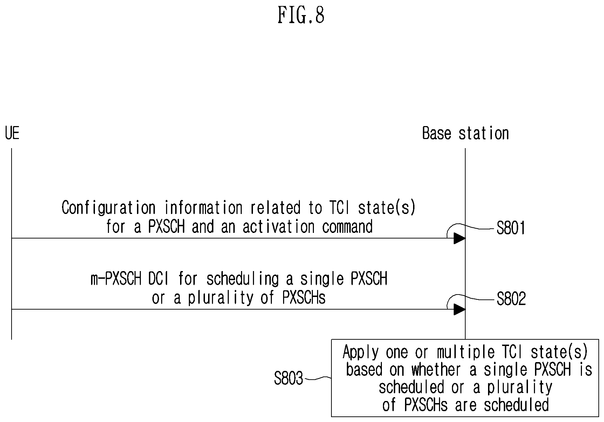

FIG. 8 is a diagram illustrating a signaling procedure between a base station and a UE for a method of transmitting and receiving an uplink signal according to an embodiment of the present disclosure.

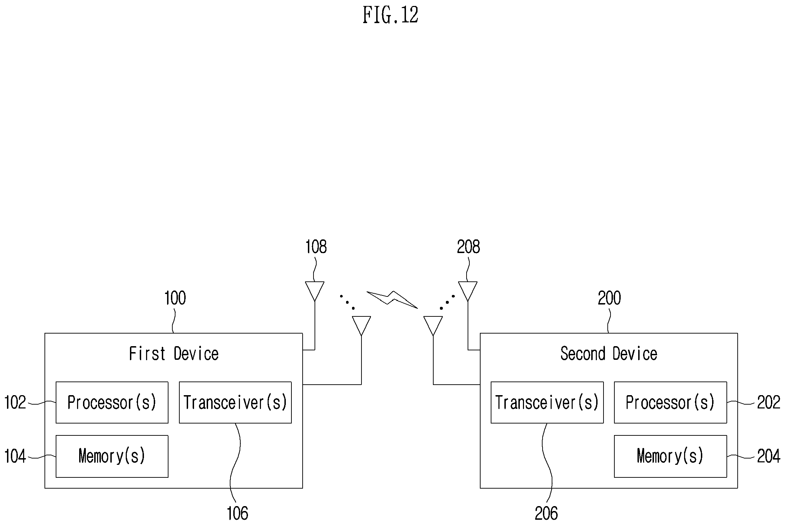

FIG. 8 illustrates a signaling procedure between a user equipment (UE) and a base station (BS) based on the method proposed above (e.g., any one of Embodiments 1 to 8 or a combination of one or more Embodiments). The example of FIG. 8 is for convenience of description and does not limit the scope of the present disclosure. Some step(s) illustrated in FIG. 8 may be omitted depending on circumstances and/or settings. In addition, the base station and the UE in FIG. 8 are only examples, and may be implemented as the device illustrated in FIG. 12 below. For example, the processor (102/202) of FIG. 12 can control to transmit and receive channels/signals/data/information, etc. using the transceiver (106/206), and can control to store transmitted or received channels/signals/data/information, etc. in the memory (104/204).

In addition, in the operation between the base station and the UE of FIG. 8, the above-described description may be referenced/used even if there is no separate mention.

A base station may be a general term for an object that transmits and receives data with a UE. For example, a base station may be a concept including one or more transmission points (TPs), one or more transmission and reception points (TRPs), etc. In addition, a TP and/or a TRP may include a panel of a base station, a transmission and reception unit, etc. In addition, "TRP" may be substituted with an expression such as a panel, an antenna array, a cell (e.g., macro cell/small cell/pico cell, etc.), a TP (transmission point), a base station (gNB, etc.) and applied. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. A configuration of such a CORESET group (or CORESET pool) may be performed through higher layer signaling (e.g., RRC signaling, etc.).

Referring to FIG. 8, for convenience of description, signaling between one base station and a UE is considered, but the corresponding signaling scheme may be extended and applied to signaling between multiple TRPs and multiple UEs. In the following description, a base station may be interpreted as one TRP. Alternatively, a base station may include a plurality of TRPs, or may be one cell including a plurality of TRPs.

Referring to FIG. 8, a base station may transmit configuration information related to TCI state(s) for a PXSCH (i.e., PDSCH and/or PUSCH) and an activation command (For example, activation command MAC CE) therefor (S801).

Here, for convenience of description, configuration information and an activation command are illustrated as one step, but configuration information (e.g., RRC signaling) and an activation command (e.g., MAC CE) may be transmitted separately from each other.

That is, a base station may configure DCI capable of scheduling a plurality of PDSCHs and/or a plurality of PUSCHs and may configure TCI state(s) corresponding to each code point in one or more entry tables of a TCI field indicated through the corresponding DCI by a combination of configuration information and an activation command.

A base station transmits m-PXSCH DCI for scheduling one or a plurality of PXSCHs (i.e., PDSCH and/or PUSCH) to a UE (S802).

Here, as described above, m-PXSCH DCI may schedule a single PXSCH or a plurality of PXSCHs and may include scheduling information (e.g., resource information, beam direction information, etc.) on a single PXSCH or a plurality of PXSCHs. Specifically, a transmission configuration indication (TCI) field for configuring beams for a plurality of PDSCHs or a plurality of PUSCHs may be included. In addition, as described above, one or more code points may be indicated by a TCI field in m-PXSCH DCI, and the indicated code point may correspond to one or more TCI state(s) based on one or more entry tables. That is, based on TCI state(s) corresponding to a code point indicated by a TCI field, a UE can determine a beam for transmitting and receiving a PXSCH.

Here, as in Embodiment 6 above, a rule may be determined to prioritize a search space set associated with an m-PXSCH DCI format.

A UE applies one or multiple TCI state(s) for transmitting and receiving a PXSCH based on whether a single PXSCH is scheduled or a plurality PXSCHs are scheduled (S803).

That is, a UE may interpret a code point of a TCI field differently based on whether a single or multiple PXSCHs are scheduled, alternatively, another entry table may be used to determine TCI state (s) corresponding to a code point of the corresponding TCI field.

For example, as in Embodiment 1 above, even if a plurality of TCI states are indicated in a TCI field in m-PXSCH DCI, i) when only a single PXSCH is scheduled, a UE can perform PXSCH transmission and reception by applying an eMBB scheme, FDM scheme A/B, or TDM scheme A/B according to a configuration parameter, or ii) when multiple PXSCHs are scheduled, a UE can perform PXSCH transmission and reception by applying a specific TCI state or a basic TCI state among the indicated TCI states.

For example, as in Embodiment 2 above, a plurality of entry tables are configured, and a UE can perform PXSCH transmission and reception by selecting (determining) an appropriate entry table according to the number of scheduled PXSCHs and applying a TCI state for each PXSCH.

For example, as in Embodiment 3 above, when a plurality of TCI states are indicated in a TCI field in m-PXSCH DCI and a plurality of PXSCHs are scheduled, a UE can to perform PXSCH transmission and reception by applying an eMBB scheme, FDM scheme A/B, or TDM scheme A/B according to a configuration parameter only to one specific PXSCH, and by applying one specific TCI state or a basic TCI state to the remaining PXSCHs.

In addition, as in Embodiment 4 above, when a plurality of PXSCHs in m-PXSCH DCI are scheduled, a plurality of TCI states may not be indicated in a TCI field in m-PXSCH DCI (a UE can assume this).

In addition, as in Embodiment 5 above, when a plurality of TCI states are indicated in a TCI field in m-PXSCH DCI and a plurality of PXSCHs are scheduled, a UE may apply an eMBB scheme, FDM scheme A/B, or TDM scheme A/B to a plurality of PXSCHs according to a configuration parameter.

In addition, if a plurality of PXSCHs are scheduled by m-PXSCH DCI, when an offset between each PXSCH is smaller than a time interval for QCL (timeDurationForQCL) and QCL type D is configured for any one of TCI states configured for the corresponding PXSCH, as in Embodiment 7 above, a basic TCI state to be applied to the corresponding PDSCH may be determined.

In addition, as in Embodiment 8 above, when beams (i.e., beam information) between a first uplink transmission without a dynamic grant and one or more second uplink transmissions scheduled by a single DCI (e.g., m-PXSCH DCI) are different, the first uplink transmission and/or the second uplink transmission will be described with reference to the drawings below.

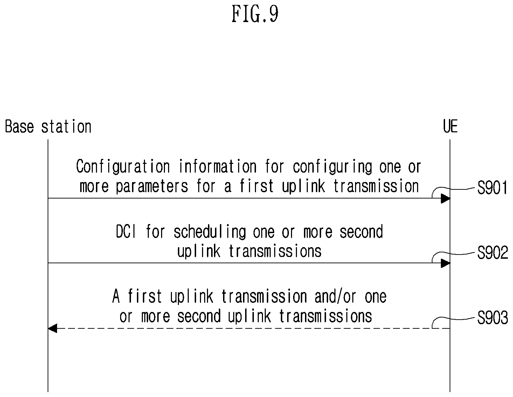

FIG. 9 is a diagram illustrating a signaling procedure between a base station and a UE for a method of transmitting and receiving an uplink signal according to an embodiment of the present disclosure.

FIG. 9 illustrates a signaling procedure between a user equipment (UE) and a base station (BS) based on the method proposed above (e.g., any one of Embodiments 1 to 8 or a combination of one or more Embodiments). The example of FIG. 9 is for convenience of description and does not limit the scope of the present disclosure. Some step(s) illustrated in FIG. 9 may be omitted depending on circumstances and/or settings. In addition, the base station and the UE in FIG. 9 are only examples, and may be implemented as the device illustrated in FIG. 12 below. For example, the processor (102/202) of FIG. 12 can control to transmit and receive channels/signals/data/information, etc. using the transceiver (106/206), and can control to store transmitted or received channels/signals/data/information, etc. in the memory (104/204).

In addition, in the operation between the base station and the UE of FIG. 9, the above-described description may be referenced/used even if there is no separate mention.

A base station may be a general term for an object that transmits and receives data with a UE. For example, a base station may be a concept including one or more transmission points (TPs), one or more transmission and reception points (TRPs), etc. In addition, a TP and/or a TRP may include a panel of a base station, a transmission and reception unit, etc. In addition, "TRP" may be substituted with an expression such as a panel, an antenna array, a cell (e.g., macro cell/small cell/pico cell, etc.), a TP (transmission point), a base station (gNB, etc.) and applied. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. A configuration of such a CORESET group (or CORESET pool) may be performed through higher layer signaling (e.g., RRC signaling, etc.).

Referring to FIG. 9, for convenience of description, signaling between one base station and a UE is considered, but the corresponding signaling scheme may be extended and applied to signaling between multiple TRPs and multiple UEs. In the following description, a base station may be interpreted as one TRP. Alternatively, a base station may include a plurality of TRPs, or may be one cell including a plurality of TRPs.

Referring to FIG. 9, a UE receives configuration information for configuring one or more parameters for a first uplink transmission from a base station (S901).

Here, a first uplink transmission refers to uplink transmission in which transmission parameter(s) are configured by higher layer signaling (e.g., RRC signaling). In other words, a first uplink transmission may mean uplink transmission that is not scheduled by DCI (except active (or triggered) by DCI).

For example, a first uplink transmission may include a configured grant PUSCH, a periodic SRS, a semi-persistent SRS, a PUSCH carrying semi-persistent CSI, a periodic PUCCH, and a semi-persistent PUCCH etc. Here, for example, in the case of a configured grant PUSCH, it may correspond to the configuredGrantConfig IE exemplified in Table 11 above.

Additionally, configuration information may include first beam information for a first uplink transmission (i.e., information on a beam applied to a first uplink transmission). Here, first beam information may include at least one of a quasi co-location (QCL) source, a transmission configuration indicator (TCI) state index, and/or a sounding reference signal resource indicator (SRI).

A UE receives DCI for scheduling one or more second uplink transmissions from a base station (S902).

Here, DCI may be transmitted through a physical channel (e.g., PDCCH).

In addition, DCI may schedule one second uplink transmission or a plurality of second uplink transmissions. For example, DCI may correspond to m-PXSCH DCI of the above-described embodiment. That is, in this case, even if not shown in FIG. 9, operations illustrated in FIG. 8 (e.g., operations based on Embodiments 1 to 7) may be applied.

Here, one or more second uplink transmissions mean uplink transmissions scheduled for DCI (i.e., dynamic grant).

For example, one or more second uplink transmissions may include a dynamic grant PUSCH, an aperiodic SRS, etc.

In addition, DCI may include second beam information or information indicating second beam information for one or more second uplink transmissions. For example, second beam information may include at least one of a quasi co-location (QCL) source, a transmission configuration indicator (TCI) state index, and/or a sounding reference signal resource indicator (SRI).

In addition, as in Embodiment 8 above, one or more second uplink transmissions may be scheduled in a time resource different from that of the first uplink transmission. For example, second uplink transmission may be scheduled prior to first uplink transmission (before in the time domain), or may be scheduled after first uplink transmission (before in the time domain). In addition, for example, one or more second uplink transmissions may be scheduled in a time resource (e.g., slot or symbol) contiguous with the first uplink transmission.

A UE transmits a first uplink transmission and/or one or more second uplink transmissions to a base station (S903).

Here, as in the Embodiment 9, based on the difference between first beam information for first uplink transmission and second beam information for one or more second uplink transmissions, whether to transmit first uplink transmission and/or one or more second uplink transmissions may be determined based on time required for beam switching (BST) (e.g., the number of slots or the number of symbols, or a unit of time such as milliseconds (msec), microseconds ($\mu$s), etc.) and/or time required for canceling uplink transmission (UCT) (e.g., the number of slots or the number of symbols, or a unit of time such as milliseconds (msec), microseconds ($\mu$s), etc.). That is, based on time required for beam switching (BST) and/or time required for canceling uplink transmission (UCT), a UE may determine whether to transmit first uplink transmission and/or one or more second uplink transmissions (and applied beam for transmission). In addition, a base station may assume that a UE determines whether to transmit a first uplink transmission and/or one or more second uplink transmissions (and a beam applied for transmission) based on time required for beam switching (BST) and/or time required for canceling uplink transmission (UCT).

For example, in the present disclosure, a time interval from one specific time (A) to another specific time (B) may be denoted/calculated in units of time such as milliseconds (msec), microseconds ($\mu$s), etc.

Alternatively, in the present disclosure, specific time (i.e., reception time or transmission time) may be interpreted as a corresponding symbol or slot. In this case, a time interval from one specific time (A) to another specific time (B) may mean a time interval from the start/end of a symbol or slot corresponding to one specific time (A) to the start/end of a symbol or slot corresponding to another specific time (B). In addition, a time interval from one specific time (A) to another specific time (B) may mean a time interval from the start/end of a symbol or slot corresponding to one specific time (A) to the end/start of a symbol or slot corresponding to another specific time (B).

For example, when a time interval from reception time of DCI to transmission time of a first uplink transmission is greater than or equal to time required for beam switching, a UE may transmit a first uplink transmission and one or more second uplink transmissions based on second beam information. That is, a base station may assume that a UE transmits a first uplink transmission and one or more second uplink transmissions based on second beam information.

In addition, for example, when a time interval from reception time of DCI to transmission time of a first uplink transmission is smaller than time required for beam switching, a UE may drop a first uplink transmission and transmit one or more second uplink transmissions based on second beam information. That is, a base station may assume that a UE drops a first uplink transmission and transmits one or more second uplink transmissions based on second beam information.

In addition, for example, when a time interval from reception time of DCI to transmission time of a first uplink transmission is greater than or equal to time required to cancel uplink transmission, a UE may drop first uplink transmission and transmit one or more second uplink transmissions based on second beam information. That is, a base station may assume that a UE drops first uplink transmission and transmits one or more second uplink transmissions based on second beam information.

In addition, for example, when a time interval from reception time of DCI to transmission time of a first uplink transmission is smaller than time required to cancel uplink transmission, a UE may transmit first uplink transmission based on first beam information and may drop part or all of one or more second uplink transmissions. That is, a base station may assume that a UE transmits first uplink transmission based on first beam information and drops some or all of one or more second uplink transmissions. Here, when a plurality of second uplink transmissions are scheduled by DCI, only a second uplink transmission closest to first uplink transmission in a time domain may be dropped from among the plurality of second uplink transmissions.

In addition, for example, a time interval from reception time of DCI to transmission time of a first uplink transmission is smaller than time required for beam switching and greater than or equal to time required to cancel uplink transmission, a UE may drop first uplink transmission and transmit one or more second uplink transmissions based on second beam information. That is, a base station may assume that a UE drops the first uplink transmission and transmits one or more second uplink transmissions based on second beam information.

In addition, for example, a time interval from reception time of DCI to transmission time of a first uplink transmission is smaller than time required for beam switching and smaller than time required to cancel uplink transmission, a UE may transmit first uplink transmission based on first beam information and may drop part or all of one or more second uplink transmissions. That is, a base station may assume that a UE transmits a first uplink transmission based on first beam information and drops some or all of one or more second uplink transmissions. Here, when a plurality of second uplink transmissions are scheduled by DCI, only a second uplink transmission closest to a first uplink transmission in a time domain may be dropped from among the plurality of second uplink transmissions.

In addition, for example, when a time interval between transmission time of a first uplink transmission and transmission time of one or more second uplink transmissions is greater than or equal to time required for beam switching, a UE may transmit a first uplink transmission based on first beam information and transmit one or more second uplink transmissions based on second beam information. That is, a base station may assume that a UE transmits a first uplink transmission based on first beam information and transmits one or more second uplink transmissions based on second beam information.

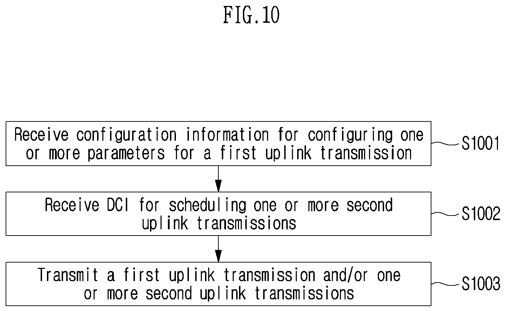

FIG. 10 is a diagram illustrating an operation of a UE for a method of transmitting and receiving an uplink according to an embodiment of the present disclosure.

FIG. 10 illustrates an operation of a UE based on the method proposed above (e.g., any one of Embodiments 1 to 8 or a combination of one or more Embodiments). The example of FIG. 10 is for convenience of description and does not limit the scope of the present disclosure. Some step(s) illustrated in FIG. 10 may be omitted depending on circumstances and/or settings. In addition, the UE in FIG. 10 is only an example, and may be implemented as the device illustrated in FIG. 12 below. For example, the processor (102/202) of FIG. 12 can control to transmit and receive channels/signals/data/information, etc. (e.g., RRC signaling, MAC CE, DCI for UL/DL scheduling, SRS, PDCCH, PDSCH, PUSCH, PUCCH, PHICH, etc.) using the transceiver (106/206), and can control to store transmitted or received channels/signals/data/information, etc. in the memory (104/204).

Referring to FIG. 10, a UE receives configuration information for configuring one or more parameters for a first uplink transmission from a base station (S1001).

Here, a first uplink transmission refers to uplink transmission in which transmission parameter(s) are configured by higher layer signaling (e.g., RRC signaling). In other words, a first uplink transmission may mean uplink transmission that is not scheduled by DCI (i.e., without dynamic grant) (e.g., except DCI for activation (or trigger) of a configured grant PUSCH).

For example, a first uplink transmission may include a configured grant PUSCH, a periodic SRS, a semi-persistent SRS, a PUSCH carrying semi-persistent CSI, a periodic PUCCH, and a semi-persistent PUCCH etc. Here, for example, in the case of a configured grant PUSCH, it may correspond to the configuredGrantConfig IE exemplified in Table 11 above.

Additionally, configuration information may include first beam information for a first uplink transmission (i.e., information on a beam applied to a first uplink transmission). Here, first beam information may include at least one of a quasi co-location (QCL) source, a transmission configuration indicator (TCI) state index, and/or a sounding reference signal resource indicator (SRI).

A UE receives DCI for scheduling one or more second uplink transmissions from a base station (S1002).

Here, DCI may be transmitted through a physical channel (e.g., PDCCH).

In addition, DCI may schedule one second uplink transmission or a plurality of second uplink transmissions. For example, DCI may correspond to m-PXSCH DCI of the above-described embodiment. That is, in this case, even if not shown in FIG. 10, operations illustrated in FIG. 8 (e.g., operations based on Embodiments 1 to 7) may be applied.

Here, one or more second uplink transmissions mean uplink transmissions scheduled for DCI (i.e., dynamic grant).

For example, one or more second uplink transmissions may include a dynamic grant PUSCH, an aperiodic SRS, etc.

In addition, DCI may include second beam information or information indicating second beam information for one or more second uplink transmissions. For example, second beam information may include at least one of a quasi co-location (QCL) source, a transmission configuration indicator (TCI) state index, and/or a sounding reference signal resource indicator (SRI).

In addition, as in Embodiment 8 above, one or more second uplink transmissions may be scheduled in a time resource different from that of the first uplink transmission. For example, second uplink transmission may be scheduled prior to first uplink transmission (before in the time domain), or may be scheduled after first uplink transmission (before in the time domain). In addition, for example, one or more second uplink transmissions may be scheduled in a time resource (e.g., slot or symbol) contiguous with the first uplink transmission.

A UE transmits a first uplink transmission and/or one or more second uplink transmissions to a base station (S1003).

Here, as in the Embodiment 9, based on the difference between first beam information for first uplink transmission and second beam information for one or more second uplink transmissions, whether to transmit first uplink transmission and/or one or more second uplink transmissions may be determined based on time required for beam switching (BST) (e.g., the number of slots or the number of symbols, or a unit of time such as milliseconds (msec), microseconds (μs), etc.) and/or time required for canceling uplink transmission (UCT) (e.g., the number of slots or the number of symbols, or a unit of time such as milliseconds (msec), microseconds (μs), etc.). That is, based on time required for beam switching (BST) and/or time required for canceling uplink transmission (UCT), a UE may determine whether to transmit first uplink transmission and/or one or more second uplink transmissions (and applied beam for transmission).

For example, when a time interval from reception time of DCI to transmission time of a first uplink transmission is greater than or equal to time required for beam switching, a UE may transmit a first uplink transmission and one or more second uplink transmissions based on second beam information.

In addition, for example, when a time interval from reception time of DCI to transmission time of a first uplink transmission is smaller than time required for beam switching, a UE may drop a first uplink transmission and transmit one or more second uplink transmissions based on second beam information.

In addition, for example, when a time interval from reception time of DCI to transmission time of a first uplink transmission is greater than or equal to time required to cancel uplink transmission, a UE may drop first uplink transmission and transmit one or more second uplink transmissions based on second beam information.

In addition, for example, when a time interval from reception time of DCI to transmission time of a first uplink transmission is smaller than time required to cancel uplink transmission, a UE may transmit first uplink transmission based on first beam information and may drop part or all of one or more second uplink transmissions. Here, when a plurality of second uplink transmissions are scheduled by DCI, only a second uplink transmission closest to first uplink transmission in a time domain may be dropped from among the plurality of second uplink transmissions.

In addition, for example, a time interval from reception time of DCI to transmission time of a first uplink transmission is smaller than time required for beam switching and greater than or equal to time required to cancel uplink transmission, a UE may drop first uplink transmission and transmit one or more second uplink transmissions based on second beam information.

In addition, for example, a time interval from reception time of DCI to transmission time of a first uplink transmission is smaller than time required for beam switching and smaller than time required to cancel uplink transmission, a UE may transmit first uplink transmission based on first beam information and may drop part or all of one or more second uplink transmissions. Here, when a plurality of second uplink transmissions are scheduled by DCI, only a second uplink transmission closest to a first uplink transmission in a time domain may be dropped from among the plurality of second uplink transmissions.

In addition, for example, when a time interval between transmission time of a first uplink transmission and transmission time of one or more second uplink transmissions is greater than or equal to time required for beam switching, a UE may transmit a first uplink transmission based on first beam information and transmit one or more second uplinks transmissions based on second beam information.

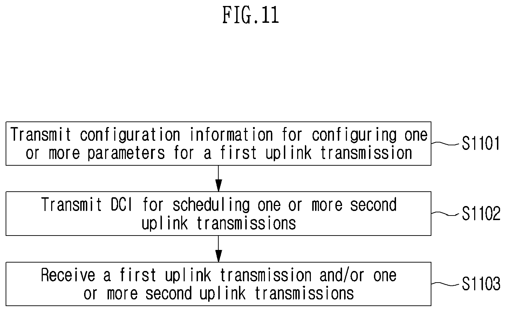

FIG. 11 is a diagram illustrating an operation of a base station for a method of transmitting and receiving an uplink according to an embodiment of the present disclosure.

FIG. 11 illustrates an operation of a base station based on the method proposed above (e.g., any one of Embodiments 1 to 8 or a combination of one or more Embodiments). The example of FIG. 11 is for convenience of description and does not limit the scope of the present disclosure. Some step(s) illustrated in FIG. 11 may be omitted depending on circumstances and/or settings. In addition, the base station in FIG. 11 is only an example, and may be implemented as the device illustrated in FIG. 12 below. For example, the processor (102/202) of FIG. 12 can control to transmit and receive channels/signals/data/information, etc. (e.g., RRC signaling, MAC CE, DCI for UL/DL scheduling, SRS, PDCCH, PDSCH, PUSCH, PUCCH, PHICH, etc.) using the transceiver (106/206), and can control to store transmitted or received channels/signals/data/information, etc. in the memory (104/204).

Referring to FIG. 11, a base station transmits configuration information for configuring one or more parameters for first uplink transmission to a UE (S1101).

Here, a first uplink transmission refers to uplink transmission in which transmission parameter(s) are configured by higher layer signaling (e.g., RRC signaling). In other words, a first uplink transmission may mean uplink transmission that is not scheduled by DCI (i.e., without dynamic grant) (e.g., except DCI for activation (or trigger) of a configured grant PUSCH).

For example, a first uplink transmission may include a configured grant PUSCH, a periodic SRS, a semi-persistent SRS, a PUSCH carrying semi-persistent CSI, a periodic PUCCH, and a semi-persistent PUCCH etc. Here, for example, in the case of a configured grant PUSCH, it may correspond to the configuredGrantConfig IE exemplified in Table 11 above.

Additionally, configuration information may include first beam information for a first uplink transmission (i.e., information on a beam applied to a first uplink transmission). Here, first beam information may include at least one of a quasi co-location (QCL) source, a transmission configuration indicator (TCI) state index, and/or a sounding reference signal resource indicator (SRI).

A base station transmits DCI for scheduling one or more second uplink transmissions to a UE (S1102).

Here, DCI may be transmitted through a physical channel (e.g., PDCCH).

In addition, DCI may schedule one second uplink transmission or a plurality of second uplink transmissions. For example, DCI may correspond to m-PXSCH DCI of the above-described embodiment. That is, in this case, even if not shown in FIG. 11, operations illustrated in FIG. 8 (e.g., operations based on Embodiments 1 to 7) may be applied.

Here, one or more second uplink transmissions mean uplink transmissions scheduled for DCI (i.e., dynamic grant).

For example, one or more second uplink transmissions may include a dynamic grant PUSCH, an aperiodic SRS, etc.

In addition, DCI may include second beam information or information indicating second beam information for one or more second uplink transmissions. For example, second beam information may include at least one of a quasi co-location (QCL) source, a transmission configuration indicator (TCI) state index, and/or a sounding reference signal resource indicator (SRI).

In addition, as in Embodiment 8 above, one or more second uplink transmissions may be scheduled in a time resource different from that of the first uplink transmission. For example, second uplink transmission may be scheduled prior to first uplink transmission (before in the time domain), or may be scheduled after first uplink transmission (before in the time domain). In addition, for example, one or more second uplink transmissions may be scheduled in a time resource (e.g., slot or symbol) contiguous with the first uplink transmission.

A base station receives a first uplink transmission and/or one or more second uplink transmissions from a UE (S1103) .

Here, as in the Embodiment 9, based on the difference between first beam information for first uplink transmission and second beam information for one or more second uplink transmissions, whether to transmit first uplink transmission and/or one or more second uplink transmissions may be determined based on time required for beam switching (BST) (e.g., the number of slots or the number of symbols, or a unit of time such as milliseconds (msec), microseconds (μs), etc.) and/or time required for canceling uplink transmission (UCT) (e.g., the number of slots or the number of symbols, or a unit of time such as milliseconds (msec), microseconds (ps), etc.). That is, a base station may assume that based on time required for beam switching (BST) and/or time required for canceling uplink transmission (UCT), a UE determines whether to transmit first uplink transmission and/or one or more second uplink transmissions (and applied beam for transmission).

For example, when a time interval from reception time of DCI to transmission time of a first uplink transmission is greater than or equal to time required for beam switching, a base station may assume that a UE transmit a first uplink transmission and one or more second uplink transmissions based on second beam information.

In addition, for example, when a time interval from reception time of DCI to transmission time of a first uplink transmission is smaller than time required for beam switching, a base station may assume that a UE drops a first uplink transmission and transmits one or more second uplink transmissions based on second beam information.

In addition, for example, when a time interval from reception time of DCI to transmission time of a first uplink transmission is greater than or equal to time required to cancel uplink transmission, a base station may assume that a UE drops first uplink transmission and transmits one or more second uplink transmissions based on second beam information.

In addition, for example, when a time interval from reception time of DCI to transmission time of a first uplink transmission is smaller than time required to cancel uplink transmission, a base station may assume that a UE transmits first uplink transmission based on first beam information and drops part or all of one or more second uplink transmissions. Here, when a plurality of second uplink transmissions are scheduled by DCI, only a second uplink transmission closest to first uplink transmission in a time domain may be dropped from among the plurality of second uplink transmissions.

In addition, for example, a time interval from reception time of DCI to transmission time of a first uplink transmission is smaller than time required for beam switching and greater than or equal to time required to cancel uplink transmission, a base station may assume that a UE drops first uplink transmission and transmits one or more second uplink transmissions based on second beam information.

In addition, for example, a time interval from reception time of DCI to transmission time of a first uplink transmission is smaller than time required for beam switching and smaller than time required to cancel uplink transmission, a base station may assume that a UE transmits first uplink transmission based on first beam information and drops part or all of one or more second uplink transmissions. Here, when a plurality of second uplink transmissions are scheduled by DCI, only a second uplink transmission closest to a first uplink transmission in a time domain may be dropped from among the plurality of second uplink transmissions.

In addition, for example, when a time interval between transmission time of a first uplink transmission and transmission time of one or more second uplink transmissions is greater than or equal to time required for beam switching, a base station may assume that a UE transmits a first uplink transmission based on first beam information and transmits one or more second uplink transmissions based on second beam information.

General Device to which the Present Disclosure may be applied

FIG. 12 is a diagram which illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of transmitting an uplink in a wireless communication system, the method performed by a user equipment (UE) comprising:

   receiving, from a base station, configuration information for configuring one or more parameters for first uplink transmission;
   receiving, from the base station, downlink control information (DCI) for scheduling one or more second uplink transmissions; and
   transmitting, to the base station, the first uplink transmission and/or the one or more second uplink transmissions, wherein the one or more second uplink transmissions are scheduled in a time resource different from the first uplink transmission, and
   wherein based on first beam information for the first uplink transmission and the second beam information for the one or more second uplink transmissions being different, whether to transmit the first uplink transmission and/or the one or more second uplink transmissions is determined based on time required for beam switching and/or time required to cancel an uplink transmission.

2. The method of claim 1, wherein based on a time interval from reception time of the DCI to transmission time of the first uplink transmission being greater than or equal to the time required for beam switching, the first uplink transmission and the one or more second uplink transmissions are transmitted based on the second beam information.

3. The method of claim 1, wherein based on a time interval from reception time of the DCI to transmission time of the first uplink transmission being less than the time required for beam switching, the first uplink transmission is dropped and the one or more second uplink transmissions are transmitted based on the second beam information.

4. The method of claim 1, wherein based on a time interval from reception time of the DCI to transmission time of the first uplink transmission being greater than or equal to the time required to cancel an uplink transmission, the first uplink transmission is dropped and the one or more second uplink transmissions are transmitted based on the second beam

5. The method of claim 1, wherein based on a time interval from reception time of the DCI to transmission time of the first uplink transmission being less than the time required to cancel an uplink transmission, the first uplink transmission is transmitted based on the first beam information and some or all of the one or more second uplink transmissions are dropped.

6. The method of claim 5, wherein based on a plurality of second uplink transmissions being scheduled by the DCI, among the plurality of second uplink transmissions, only the second uplink transmission closest to the first uplink transmission in a time domain is dropped.

7. The method of claim 1, wherein based on a time interval from reception time of the DCI to transmission time of the first uplink transmission being less than the time required for beam switching and greater than or equal to the time required to cancel an uplink transmission, the first uplink transmission is dropped and the one or more second uplink transmissions are transmitted based on the second beam information.

8. The method of claim 1, wherein based on a time interval from reception time of the DCI to transmission time of the first uplink transmission being less than the time required for beam switching and less than the time required to cancel an uplink transmission, the first uplink transmission is transmitted based on the first beam information, and some or all of the one or more second uplink transmissions are dropped.

9. The method of claim 8, wherein based on a plurality of second uplink transmissions being scheduled by the DCI, among the plurality of second uplink transmissions, only the second uplink transmission closest to the first uplink transmission in a time domain is dropped.

10. The method of claim 1, wherein based a time interval between transmission time of the first uplink transmission and transmission time of the one or more second uplink transmissions being greater than or equal to the time required for beam switching, the first uplink transmission is transmitted based on the first beam information, and the one or more second uplink transmissions are transmitted based on the second beam information.

11. The method of claim 1, wherein the first uplink transmission is one of a configured grant physical uplink shared channel (PUSCH), a periodic sounding reference signal (SRS), a semi-persistent SRS, a PUSCH carrying semi-persistent channel state information (CSI), a periodic physical uplink control channel (PUCCH), and a semi-persistent PUCCH.

12. The method of claim 1, wherein the second transmission is one of a dynamic grant PUSCH and an aperiodic SRS.

13. The method of claim 1, wherein the first beam information and the second beam information include at least one of a quasi co-location (QCL) source, a transmission configuration indicator (TCI) state index, and/or a sounding reference signal resource indicator (SRI).

14. A user equipment (UE) of transmitting an uplink in a wireless communication system, the UE comprising:

at least one transceiver for transmitting and receiving a wireless signal; and
at least one processor for controlling the at least one transceiver,
wherein the at least one processor configured to:

receive, from a base station, configuration information for configuring one or more parameters for first uplink transmission;
receive, from the base station, downlink control information (DCI) for scheduling one or more second uplink transmissions; and
transmit, to the base station, the first uplink transmission and/or the one or more second uplink transmissions, wherein the one or more second uplink transmissions are scheduled in a time resource different from the first uplink transmission, and
wherein based on first beam information for the first uplink transmission and the second beam information for the one or more second uplink transmissions being different, whether to transmit the first uplink transmission and/or the one or more second uplink transmissions is determined based on time required for beam switching and/or time required to cancel an uplink transmission.

15. At least one non-transitory computer-readable medium storing at least one instruction, wherein the at least one instruction executable by at least one processor controls a device of transmitting an uplink to:

receive, from a base station, configuration information for configuring one or more parameters for first uplink transmission;
receive, from the base station, downlink control information (DCI) for scheduling one or more second uplink transmissions; and
transmit, to the base station, the first uplink transmission and/or the one or more second uplink transmissions, wherein the one or more second uplink transmissions are scheduled in a time resource different from the first uplink transmission, and
wherein based on first beam information for the first uplink transmission and the second beam information for the one or more second uplink transmissions being different, whether to transmit the first uplink transmission and/or the one or more second uplink transmissions is determined based on time required for beam switching and/or time required to cancel an uplink transmission.

16. A processing apparatus configured to control a user equipment (UE) of transmitting an uplink in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information for configuring one or more parameters for first uplink transmission;
receiving, from the base station, downlink control information (DCI) for scheduling one or more second uplink transmissions; and
transmitting, to the base station, the first uplink transmission and/or the one or more second uplink transmissions,
wherein the one or more second uplink transmissions are scheduled in a time resource different from the first uplink transmission, and

wherein based on first beam information for the first uplink transmission and the second beam information for the one or more second uplink transmissions being different, whether to transmit the first uplink transmission and/or the one or more second uplink transmissions is determined based on time required for beam switching and/or time required to cancel an uplink transmission.

17. A method of receiving an uplink in a wireless communication system, the method performed by a base station comprising:

transmitting, to a user equipment (UE), configuration information for configuring one or more parameters for first uplink transmission;

transmitting, to the UE, downlink control information (DCI) for scheduling one or more second uplink transmissions; and

receiving, from the UE, the first uplink transmission and/or the one or more second uplink transmissions,

wherein the one or more second uplink transmissions are scheduled in a time resource different from the first uplink transmission, and

wherein based on first beam information for the first uplink transmission and the second beam information for the one or more second uplink transmissions being different, whether to transmit the first uplink transmission and/or the one or more second uplink transmissions is assumed to be determined based on time required for beam switching and/or time required to cancel an uplink transmission.

18. A base station of receiving an uplink in a wireless communication system, the base station comprising:

at least one transceiver for transmitting and receiving a wireless signal; and

at least one processor for controlling the at least one transceiver,

wherein the at least one processor configured to:

transmit, to a user equipment (UE), configuration information for configuring one or more parameters for first uplink transmission;

transmit, to the UE, downlink control information (DCI) for scheduling one or more second uplink transmissions; and

receive, from the UE, the first uplink transmission and/or the one or more second uplink transmissions,

wherein the one or more second uplink transmissions are scheduled in a time resource different from the first uplink transmission, and

wherein based on first beam information for the first uplink transmission and the second beam information for the one or more second uplink transmissions being different, whether to transmit the first uplink transmission and/or the one or more second uplink transmissions is assumed to be determined based on time required for beam switching and/or time required to cancel an uplink transmission.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 |10|11|12|13|

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0 ·····

k=0

FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601    S602    S603    S604    S605    S606    S607    S608

· DL/UL ACK/NACK
· UE CQI/PMI RI REPORT
  USING PUSCH AND PUCCH

FIG.7

**(a)**

| N | N+1 | N+2 | N+3 | N+4 | N+5 |
|---|-----|-----|-----|-----|-----|

gNB | UL grant |

Indicated
with beam B

UE | | | | CG-PUSCH | DG-PUSCH | DG-PUSCH |

Configured
with beam A   701a   702a

**(b)**

| N | N+1 | N+2 | N+3 | N+4 | N+5 | N+6 |
|---|-----|-----|-----|-----|-----|-----|

gNB | UL grant |

Indicated
with beam B

UE | | | | DG-PUSCH | DG-PUSCH | CG-PUSCH |

701b   702b   Configured
with beam A

FIG.8

UE                                                                    Base station

Configuration information related to TCI state(s)
for a PXSCH and an activation command                        ⌐S801

m-PXSCH DCI for scheduling a single PXSCH
or a plurality of PXSCHs                                       ⌐S802

S803⌐ | Apply one or multiple TCI state(s)
based on whether a single PXSCH is
scheduled or a plurality
of PXSCHs are scheduled

FIG.9

Base station                                                                    UE

Configuration information for configuring one or
more parameters for a first uplink transmission                    ——S901

DCI for scheduling one or more second
uplink transmissions                                               ——S902

A first uplink transmission and/or one
or more second uplink transmissions                                ——S903

FIG.10

| Receive configuration information for configuring one or more parameters for a first uplink transmission | ~S1001 |

| Receive DCI for scheduling one or more second uplink transmissions | ~S1002 |

| Transmit a first uplink transmission and/or one or more second uplink transmissions | ~S1003 |

FIG.11

| Transmit configuration information for configuring one or more parameters for a first uplink transmission | S1101 |

| Transmit DCI for scheduling one or more second uplink transmissions | S1102 |

| Receive a first uplink transmission and/or one or more second uplink transmissions | S1103 |

FIG.12

## INTERNATIONAL SEARCH REPORT

| International application No. |
|---|
| **PCT/KR2022/000276** |

**A.     CLASSIFICATION OF SUBJECT MATTER**

**H04W 72/12**(2009.01)i; **H04W 72/04**(2009.01)i; **H04B 7/06**(2006.01)i; **H04B 7/024**(2017.01)i; **H04B 7/0408**(2017.01)i; **H04L 5/00**(2006.01)i; **H04B 17/373**(2014.01)i

According to International Patent Classification (IPC) or to both national classification and IPC

**B.     FIELDS SEARCHED**

Minimum documentation searched (classification system followed by classification symbols)

H04W 72/12(2009.01); H04L 5/00(2006.01); H04W 16/28(2009.01); H04W 24/10(2009.01); H04W 52/14(2009.01); H04W 52/36(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1/2 상향링크(first/second uplink), 하향링크 제어 정보(downlink control information), 빔 스위치(beam switch), 전송 취소(transmission cancellation), 요구되는 시간(time required)

**C.     DOCUMENTS CONSIDERED TO BE RELEVANT**

| Category* | Citation of document, with indication, where appropriate, of the relevant passages | Relevant to claim No. |
|---|---|---|
| A | US 2020-0314664 A1 (ZHOU, Hua et al.) 01 October 2020 (2020-10-01)<br>See paragraphs [0416]-[0418]; and claims 1 and 9. | 1-18 |
| A | WO 2020-168235 A1 (ZHOU, Hua et al.) 20 August 2020 (2020-08-20)<br>See paragraphs [0399]-[0344]; and claim 1. | 1-18 |
| A | US 2020-0128488 A1 (OFINNO, LLC) 23 April 2020 (2020-04-23)<br>See paragraphs [0343]-[0344]; and claims 1-2. | 1-18 |
| A | US 2020-0344747 A1 (KT CORPORATION) 29 October 2020 (2020-10-29)<br>See paragraphs [0140]-[0151]; and figure 14. | 1-18 |
| A | US 2020-0178184 A1 (SAMSUNG ELECTRONICS CO., LTD.) 04 June 2020 (2020-06-04)<br>See paragraphs [0311]-[0316]; and figure 28. | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2022** | **11 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2022/000276** |

| Patent document cited in search report | | | Publication date (day/month/year) | Patent family member(s) | | | Publication date (day/month/year) |
| --- | --- | --- | --- | --- | --- | --- | --- |
| US | 2020-0314664 | A1 | 01 October 2020 | US | 11159956 | B2 | 26 October 2021 |
| | | | | US | 2022-0007208 | A1 | 06 January 2022 |
| WO | 2020-168235 | A1 | 20 August 2020 | EP | 3925154 | A1 | 22 December 2021 |
| | | | | US | 2021-0376985 | A1 | 02 December 2021 |
| US | 2020-0128488 | A1 | 23 April 2020 | CN | 111194569 | A | 22 May 2020 |
| | | | | CN | 111194569 | B | 08 October 2021 |
| | | | | CN | 113613335 | A | 05 November 2021 |
| | | | | EP | 3552440 | A1 | 16 October 2019 |
| | | | | EP | 3552440 | B1 | 13 May 2020 |
| | | | | EP | 3713314 | A1 | 23 September 2020 |
| | | | | JP | 2020-527920 | A | 10 September 2020 |
| | | | | KR | 10-2020-0051725 | A | 13 May 2020 |
| | | | | KR | 10-2314295 | B1 | 20 October 2021 |
| | | | | US | 10524212 | B2 | 31 December 2019 |
| | | | | US | 10750453 | B2 | 18 August 2020 |
| | | | | US | 10873912 | B2 | 22 December 2020 |
| | | | | US | 11076360 | B2 | 27 July 2021 |
| | | | | US | 2019-0074882 | A1 | 07 March 2019 |
| | | | | US | 2019-0074945 | A1 | 07 March 2019 |
| | | | | US | 2019-0075524 | A1 | 07 March 2019 |
| | | | | US | 2020-0374809 | A1 | 26 November 2020 |
| | | | | US | 2021-0204221 | A1 | 01 July 2021 |
| | | | | WO | 2019-051231 | A1 | 14 March 2019 |
| US | 2020-0344747 | A1 | 29 October 2020 | US | 11259290 | B2 | 22 February 2022 |
| | | | | WO | 2019-160332 | A1 | 22 August 2019 |
| US | 2020-0178184 | A1 | 04 June 2020 | US | 10560905 | B2 | 11 February 2020 |
| | | | | US | 11006374 | B2 | 11 May 2021 |
| | | | | US | 2018-0324715 | A1 | 08 November 2018 |
| | | | | US | 2021-0266848 | A1 | 26 August 2021 |
| | | | | WO | 2018-203707 | A1 | 08 November 2018 |

Form PCT/ISA/210 (patent family annex) (July 2019)